(19) Europäisches Patentamt
European Patent Office
Office européen des brevets

(11) EP 2 990 332 A1

(12) EUROPEAN PATENT APPLICATION

(43) Date of publication:
02.03.2016 Bulletin 2016/09

(51) Int Cl.:
B64C 27/08 (2006.01)  B64C 39/02 (2006.01)

(21) Application number: 15181627.9

(22) Date of filing: 19.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 19.08.2014 US 201462039044 P

(71) Applicant: Tau Emerald Rotors Inc.
Aurora, ON L4G 7P2 (CA)

(72) Inventor: Kvitnevskiy, Vladimir
Aurora, Ontario L4G7P2 (CA)

(74) Representative: Conroy, John
Fish & Richardson P.C.
Highlight Business Towers
Mies-van-der-Rohe-Straße 8
80807 München (DE)

(54) CONTROLLING ROTARY WING AIRCRAFT

(57) A rotary wing aircraft (100) can include a central body (110) and at least three rotors (112, 114, 116, 118), each rotor connected to the central body by a swashplate. A system for controlling the flight of an aircraft with a plurality of rotors (112, 114, 116, 118) can include: an electronic control system programmed to calculate a pitch for blades (122) of each rotor of the plurality of rotors (112, 114, 116, 118) based on an input indicating a desired motion of the aircraft (100); and a plurality of swashplates, each swashplate associated with a unique rotor of the plurality of rotors (112, 114, 116, 118), each swash plate in electronic communication with the electronic control system and operable to control the pitch for blades (122) of the associated unique rotor in response to signals from the electronic control system.

FIG. 1

## Description

### TECHNICAL FIELD

This invention relates to aircraft, particularly rotary wing aircraft.

### BACKGROUND

A helicopter rotor blade, like a fixed-wing aircraft's wing, is built with an airfoil-shaped cross section. Relative motion between a wing, or airfoil, and a surrounding fluid will generate aerodynamic forces on the wing. The part of the force perpendicular to the relative fluid flow (e.g., vertical for a horizontally rotating rotor blade) is lift, and the force parallel to the relative fluid flow (e.g., horizontal for a horizontally rotating rotor blade) is drag.

At a zero angle of attack, or pitch, an airfoil is oriented directly into the flow. In this orientation, the airfoil will generate nearly zero or some small amount of lift depending on the cross sectional shape of the airfoil. As the angle of attack increases the lift force increases, up until the pitch reaches the critical angle. At the critical angle, which is the maximum angle after which the lift decreases, the airfoil experiences stall. By decreasing the pitch below the zero angle of attack, it is possible to get zero or negative lift. Positive pitch and lift are desirable in aircraft during flight to counteract gravity, whereas negative pitch and therefore negative lift are used in car spoilers to generate a downwards force to help keep the car in contact with ground.

### SUMMARY

For the purposes of discussion below, multiple rotors can mean a coaxial rotor.

Some rotary wing aircraft include: a central body; at least two rotors, each rotor connected to the central body by a swashplate; and a control system configured to calculate pitch of blades on each of the rotors to move the aircraft laterally without inclining the aircraft. Embodiments can include one or more of the features below.

Some rotary wing aircraft include: a central body; a lower rotor having a lower set of blades, the lower rotor connected to the central body by a first swashplate controlling collective and cyclic of the lower set of blades; and an upper rotor coaxial with the lower rotor, the upper rotor having an upper set of blades; the upper rotor connected to the central body by a second swashplate controlling pitch of the upper set of blades independently of the collective and cyclic of the lower set of blades. Embodiments can include one or more of the features below.

Some systems for controlling the flight of an aircraft with a plurality of rotors include: an electronic control system programmed to calculate a pitch for blades of each rotor of the plurality of rotors based on an input indicating a desired motion of the aircraft, the electronic control system operable to calculate the desired pitch for blades of each rotor of the plurality of rotors to provide lateral motion of the aircraft without inclining the aircraft; and a plurality of swashplates, each swashplate associated with a unique rotor of the plurality of rotors, each swash plate in communication with the electronic control system and operable to control the pitch for blades of the associated unique rotor in response to signals (e.g., electronic or hydraulic signals) from the electronic control system. Embodiments can include one or more of the features below In some embodiments, the at least two rotors comprise four rotors.

In some embodiments, the aircraft is a coaxial helicopter.

In some embodiments, the aircraft is a quadcopter.

In some embodiments, the aircraft includes a control system operable to control pitch of blades on each of the four rotors independently.

In some embodiments, the control system comprises a remote control unit (e.g., a hand-held remote control unit).

In some embodiments, the aircraft includes onboard controls configured to be operated by a pilot.

Some systems and/or aircraft include a remote unit is in wireless electronic communication with the electronic control system to provide the input to the control system.

Some systems and/or aircraft include an onboard input system operable by a pilot to provide the input to the electronic control system.

In some embodiments, the electronic control system is operable to calculate the desired pitch for blades of each rotor of the plurality of rotors to vary the yaw of a quadrotor with zero lift and without using a tail rotor or a NOTAR system.

In some embodiments, the swashplates are operable to control pitch of blades on each of the plurality of rotors independently.

Some systems and/or aircraft include a control system configured to calculate collective and cyclic of the lower set of blades and collective and cyclic of the upper set of blades to move the aircraft laterally without inclining the aircraft.

Some systems and/or aircraft include a third swashplate with: a non-rotating portion; base control rods operable to tilt and axially move the non-rotating portion; and a rotating portion mounted on the non-rotating portion.

In some embodiments, the rotating portion of the third swashplate is mechanically connected to a bottom rotor of the coaxial rotor such that the rotating portion of the third swashplate rotates with a speed and direction of the bottom rotor.

Some systems and/or aircraft include first control rods extending from the first swashplate through apertures in the non-rotating portion of the third swashplate.

Some systems and/or aircraft include second control rods extending from the rotating portion of the third swashplate to the second swashplate.

Some systems and/or aircraft include individual cyclic and collective controls on the upper rotor and the lower rotor.

Some methods of controlling the flight of a multirotor aircraft include: receiving input indicating desired motion of the multirotor aircraft in an electronic control system; calculating, in the electronic control system, a pitch cycle for each rotor of the multirotor aircraft based on the input; transmitting a control signal including information about the pitch cycle to a plurality of swashplates, each swash plate associated with a unique rotor of the multirotor aircraft; and operating the plurality of swash plates to provide the pitch cycle for the associated rotor; wherein calculating a pitch cycle for each rotor of the multirotor aircraft comprises calculating a pitch cycle for each rotor of the multirotor aircraft that generates yaw thrust while producing zero lift. Embodiments can include one or more of the features below.

Some methods of controlling the flight of a multirotor aircraft include: cyclically generating a negative force in the direction of blade travel on a first rotor such that a cumulative result of the negative force on the first rotor is perpendicular to an axis of rotation of the first rotor; and cyclically generating a negative force in the direction of blade travel on a second rotor such that a cumulative result of the negative force on the second rotor is perpendicular to an axis of rotation of the second rotor. Embodiments can include one or more of the features below.

In some embodiments, calculating a pitch cycle for each rotor of the multirotor aircraft comprises calculating a pitch cycle for each rotor of the multirotor aircraft that generates sideways translational force without generating significant lift.

In some embodiments, calculating a pitch cycle for each rotor of the multirotor aircraft comprises calculating a pitch cycle for each rotor of the multirotor aircraft that generates forward motion and lift without sideways translational force, yaw, pitch or roll.

In some embodiments, calculating a pitch cycle for each rotor of the multirotor aircraft comprises calculating a pitch cycle for each rotor of a quadcopter.

In some embodiments, calculating a pitch cycle for each rotor of the multirotor aircraft comprises calculating a pitch cycle for each rotor of the multirotor aircraft that compensates for a lack of rotation of one of the rotors.

In some embodiments, methods include hovering the multirotor aircraft at an inclined angle by controlling the negative force on the first rotor and the negative force on the second rotor.

In some embodiments, methods include rotating the multirotor aircraft in place by controlling the negative force on the first rotor and the negative force on the second rotor.

In some embodiments, methods include generating sideways translational force without generating significant lift on the multirotor aircraft by controlling the negative force on the first rotor and the negative force on the second rotor.

In some embodiments, methods include generating sideways translational force without generating significant lift on the multirotor aircraft by controlling the negative force on the first rotor and the negative force on the second rotor.

In some embodiments, methods include generating forward motion and lift without sideways translational force, yaw, pitch or roll on the multirotor aircraft by controlling the negative force on the first rotor and the negative force on the second rotor.

In some embodiments, methods include: receiving input indicating desired motion of the multirotor aircraft in an electronic control system; calculating, in the electronic control system, a pitch cycle for each rotor of the multirotor aircraft based on the input; transmitting a control signal including information about the pitch cycle to a plurality of swashplates, each swash plate associated with a unique rotor of the multirotor aircraft; and operating the plurality of swash plates to provide the pitch cycle for the associated rotor.

In some embodiments, the first rotor and the second rotor are coaxial.

In some embodiments, methods include using mechanical flaps or air brakes to generate drag.

Advantages of aircraft with multiple, independently controllable, variable pitch propellers with three degree of freedom variable pitch, cyclic control, or variable pitch swashplate control can include enhancing maneuverability, allowing lift-off and landing in high winds, enhancing ground maneuverability, and executing previously-impossible aerobatics maneuvers.

A quadcopter is a multiple-rotor helicopter that is lifted and propelled by four rotors that revolve and generate lift.

The details of one or more embodiments of the invention are set forth in the accompanying drawings and the description below. Other features, objects, and advantages of the invention will be apparent from the description and drawings, and from the claims.

**DESCRIPTION OF DRAWINGS**

Figure 1 is a schematic diagram of a quadcopter.

Figure 2 is a schematic diagram of a swash plate and rotor design.

Figure 3 is a force diagram for a single blade at a specific point during its rotation.

Figure 4 is a force diagram with a couple (right and left forces) as well as a directional force (center)

Figure 5 illustrates the steps of creating a wrench (force couple and a force) from a single force vector. The diagrams visualize a top-down view of forces acting on an object on a 2D plane.

Figure 6 is a top-down view of a resultant force vector position when a blade is at position F.

Figures 7A and 7B are, respectively a schematic top view and a schematic orthographic projection of a quadcopter.

Figures 8A and 8B are, respectively, a top view and orthographic view of a sample swash control pattern that yields "forward" force.

Figures 9A and 9B are, respectively, a top view and orthographic view of a sample swash control pattern that yields "forward" force with more lift than the pattern in Figures 8A and 8B.

Figures 10A and 10B are, respectively, a top view and orthographic view of a sample swash control pattern that yields a zero-lift translational force.

Figures 11A and 11B are, respectively, a top view and orthographic view of a sample swash control pattern that yields a zero-lift yaw force.

Figure 12 shows a six degree of freedom coaxial rotor.

Like reference symbols in the various drawings indicate like elements.

**DETAILED DESCRIPTION**

This disclosure describes systems and methods implementing individual cyclic rotor control on multirotor aircraft such as, for example, multirotor manned helicopters and unmanned aerial vehicles. These systems and methods can enable thrust vectoring using, for example, three-degrees-of-freedom variable pitch rotors on a multirotor aircraft to enhance maneuverability, to allow lift-off and landing in high winds, to enhance ground maneuverability, and to execute aerobatics maneuvers such as hovering in an inclined position. Although described below with respect to quadcopters, these systems and methods can also be implemented in multirotor helicopters with more or fewer rotors as well as, for example, tiltrotors, tiltwings, gyrocopters, and other multi-swashplate helicopter variations.

**Multirotor Copter**

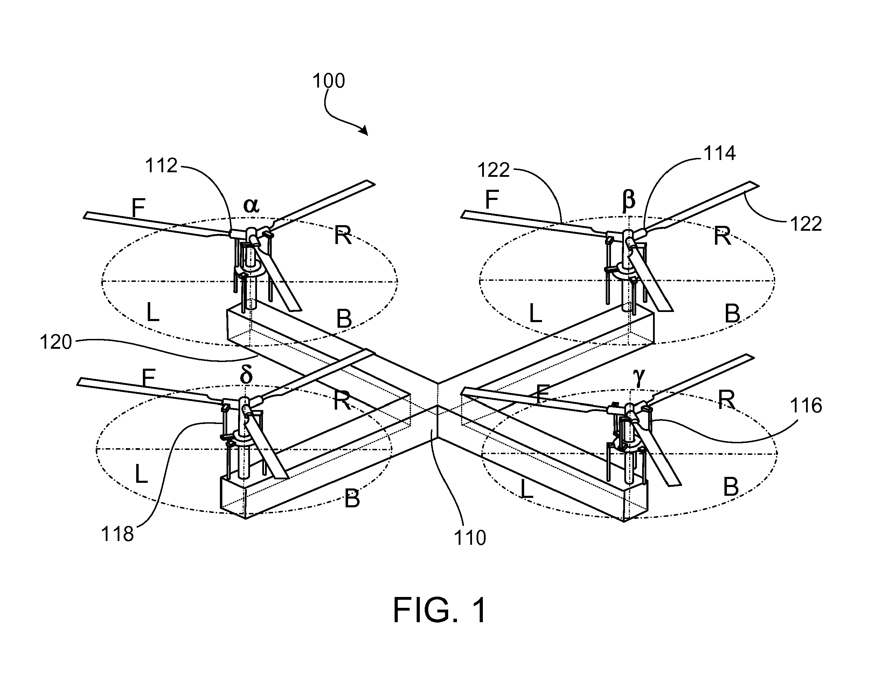

Referring to Figure 1, a small, unmanned quadcopter 100 has a central body 110 with four rotors 112, 114, 116, 118 connected to the main body by connector arms 120. Control electronics are located in the central body 110 and can be operated remotely, e.g., via a remote control handset. In some aircraft, the control electronics are located in other portions of the aircraft. In manned helicopters, the control electronics can be operated by an onboard pilot. The rotors 112, 114, 116, 118 have three rotor blades 122 that rotate about a central axis. In some implementations, the rotors have fewer (e.g., two) rotor blades or more (e.g., four or more) rotor blades. During use, adjacently mounted rotors rotate in opposite directions. For some symmetrical configurations (e.g. quadcopters), oppositely mounted rotors rotate in the same direction. For quadcopters, two rotors move in a clockwise direction and two rotors move in a counter clockwise direction.

Each rotor produces both a lift force and torque about its center of rotation, as well as yaw/pitch and horizontal forces if cyclic is applied. During normal hover, if all rotors are spinning at the same angular velocity, with rotors 112 and 116 rotating clockwise and rotors 114 and 118 counterclockwise, the torque reactions provided by driving the rotors balance such that the net aerodynamic torque and the angular acceleration about the yaw axis is zero. As a result, the quadcopter does not tend to spin about its central axis and no tail rotor is needed.

The rotor blade pitch of each rotor 112, 114, 116, 118 is independently controllable such that the rotor blades can change their pitch as the rotors 112, 114, 116, 118 rotate. In quadcopter 100, the blade pitch of each rotor is controlled by a swashplate associated with that rotor. Each of the individual swashplates is connected to the helicopter flight controls.

The independently controllable blade pitch of multiple rotors provides in a variable lift force, which can be either positive or negative (e.g., directed up or directed down) and a variable drag force, which is always positive. In the illustrated vehicle, a motor is associated with each rotor to allow independent control of each rotor. However, full-scale manned vehicles can be implemented with one or two turbines in the center of the vehicle, with four drive shafts to each rotor.

The angle of attack of the rotor blades can be altered cyclically for each rotor during rotation, creating differing amounts of lift at different points in the cycle. This arrangement of rotors allows movement of the quadcopter 100 to be controlled in six axes (three rotational and three translational), by varying the speed and pitch of each rotor 112, 114, 116, 118.

For example, to pitch the aircraft forwards, the speed / collective of the front rotor can be reduced and the speed of the rear rotor can be increased. To roll the aircraft to the right, the speed / collective of the right rotor can be reduced and the speed of the left rotor can be increased. To yaw the aircraft to the right, the speed or collective of the front and rear rotors can be reduced and the speed or collective of the left and right rotors can be increased. This creates an imbalance in the torque reaction which causes the aircraft to rotate but does not create a tilt force and does not affect the overall lift of the aircraft. To propel the aircraft forward (without rotation), the cyclic of the left and right rotors can be shifted right and the cyclic of the front and rear rotors can be shifted left. To propel the aircraft sideways without rotation, the cyclic of the left and right rotors can be shifted forward and the cyclic of the front and rear rotors can be shifted backwards.

Combining independent variable pitch rotor control with multiple rotors in quadcopter 100 allows an operator / control system to control the quadcopter, for example, to move horizontally without an associated pitch or roll or to hover in an inclined position. In contrast, both single rotor aircraft using variable pitch rotors and multiple rotor aircraft with fixed pitch rotors or variable pitch rotors without cyclic control incline with horizontal movement of the aircraft (e.g., pitch forward when moving forward).

This combination runs counter to conventional approaches, which view multirotor aircraft and cyclic control as alternatives to each other, and rotors are seen primarily as a source of lift and symmetrical rotational torque. Research to-date has focused on minimizing or compensating for the torque, and designs optimize for increased lift and decreased rotational torque via conventional and well-studied approaches. However, a thrust-vectoring design such as the one presented requires using previously-overlooked uses of unequal spread of torque and drag forces when cyclic pitch is applied, as well as deriving a full force diagram for multiple rotors with a swash plate. This idea is also different from tiltrotor and tiltwing technologies, as the rotors in this document can be stationary with respect to the body of the aircraft, while conventional tiltrotors and tiltwings do not utilize the concepts presented in this document. The concepts can still be applied to tiltrotors and tiltwing aircraft (in both hover and forward flight configurations), provided that they utilize 3DoF (three degree of freedom) swashplate rotors. The idea is also different from flapping hinges, a type of hinge that is present on fully articulated and semi-rigid helicopter rotors. Flapping hinges allow for a slight tilt of the blades when a cyclic input is applied, thereby resulting in a sideways force as well as a rotational force about the center of the rotor. The two defining differences between the idea presented and flapping hinges is that the sideways force may come from a non-hinged rotor and does not have to originate from rotor tilt, and second, the idea presented can utilize multiple rotors to reduce rotational forces.

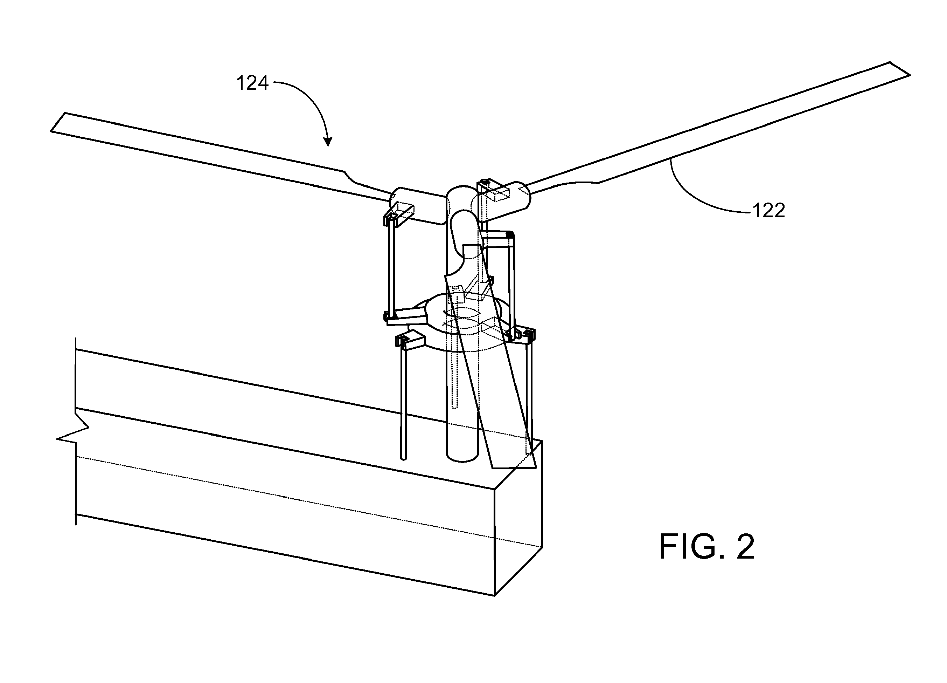

Figure 2 shows an exemplary swashplate 124 that attaches the rotors, for example rotor 112, to one of the connector arms 120, and translates input via the helicopter flight controls into motion of the main rotor blades 122. Because the main rotor blades 122 are spinning, the swashplate 124 transmits flight commands from the non-rotating central body 110 to the main blades 122 by adjusting the angle of the rotor blades with each revolution they make. For tilting forward and back to alter the pitch, or tilting sideways to alter the roll, the angle of attack of the main rotor blades is altered cyclically during rotation, creating differing amounts of lift at different points in the cycle. For increasing or decreasing overall lift, the angle of attack for all blades is collectively altered by equal amounts at the same time.

The swashplate 124 consists of two main parts: a stationary swashplate and a rotating swashplate. The stationary swash plate is fixed and does not rotate. The stationary swashplate is able to tilt in all directions and move vertically relative to a central post. The rotating swashplate is mounted to the stationary swashplate by means of a bearing and is allowed to rotate with a main rotor mast freely relative to the stationary plate. As the motor turns the rotor shaft, it also turns the rotating swash plate and the rotor blades which are connected to a hub.

Control rods or hydraulic actuators tilt the stationary swashplate in response to commands from the central body 110. Inputs from the central body 110 are transmitted via the control rods to the lower swash plate and then, ultimately, to the upper swash plate.

Using this rotor design, a user can manipulate the swashplate and control the aircraft's motion. To control the collective pitch of the main rotor blades, the entire swashplate can be moved up or down along its axis to change the angle of all blades simultaneously. The control rods adjust the pitch of each of the blades, increasing or decreasing the lift, and allowing the quadcopter 100 to gain or lose altitude.

## Controls

Cyclic controls are used to change a helicopter's roll and pitch. Actuating individual actuators on the stationary plate causes the angle of the blades to change individually as they revolve. For each swashplate, the quadcopter 100 uses three independent actuators or servos that each can move the swashplate in a cyclic/collective pitch mixing mode.

An elevator servo is used to tilt the swashplate forward and aft, varying the aircraft's pitch. The aileron servo is used to tilt the swashplate left and right, varying the aircraft's roll. The collective pitch servo raises and lowers the entire swashplate, varying the pitch of all the rotor blades collectively. When used on a single-rotor helicopter, this allows the helicopter to move in any direction, including forward, backward, left and right. Other methods of actuator placement can also be used. For example, small-scale helicopters can be implemented with 3 servos spaced at 120° from each other with CCPM - this is the method shown in Figure 1 and Figure 2.

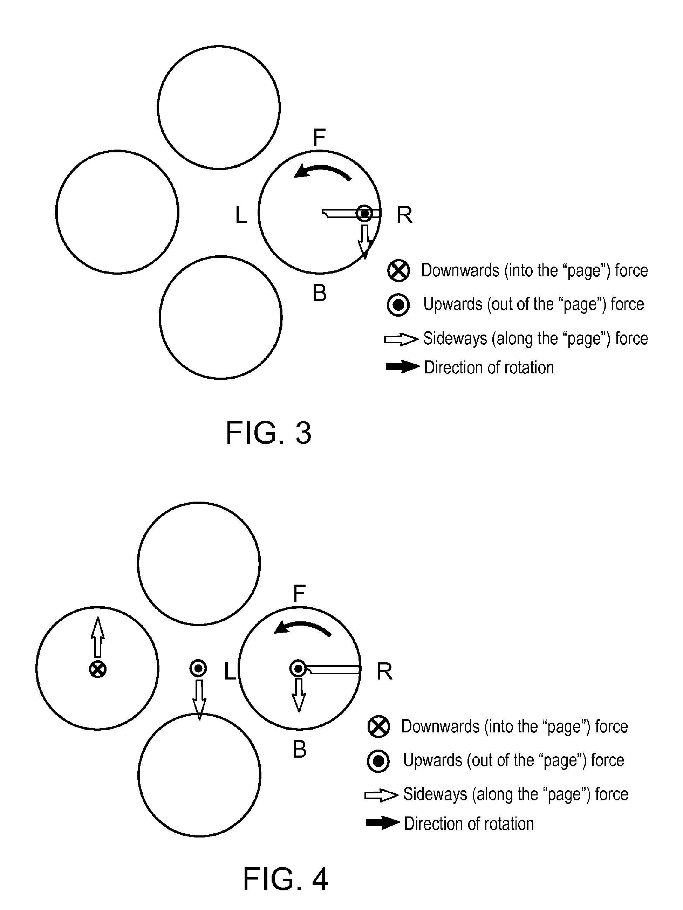

In contrast to conventional quadcopters using two sets of identical fixed pitched propellers, the quadcopter 100 uses a variable-pitch rotors including a swashplate 124 for each rotor 112, 114, 116, 118. This complexity is contrary to conventional design, as a known advantage of quadcopters is that they do not require mechanical linkages to vary the rotor blade pitch angle as they spin, which simplifies the design and maintenance of the quadcopter. The quadcopter 100 includes a swashplate for each rotor 112, 114, 116, 118 as shown in Figure 3.

By controlling the cyclic pitch of each rotor 112, 114, 116, 118 individually as the blades 122 revolve around their central axes, complex and varied motion of the central body 110 are possible.

## **Control**

Due to the system complexities, electronic control systems have replaced the direct mechanical linkages used in earlier aircraft. The theoretical basis for an exemplary control system is described below. The exemplary control system can be implemented, for example, using Tau Labs, an open-source flight control software package. Other control systems can also take advantage of cyclic rotor control in multirotor systems.

### Conventions

These conventions are used for derivation of an exemplary control system.

For simplicity, where applicable, aircraft airspeed is assumed to be zero, and rotor rotational speed is assumed to be constant. The rotors' phase angle should be corrected at swash mixer control stage, it does not affect the concepts described below. Although full articulation rotors and semi-rigid rotors (such as teetering rotors and flybar designs) introduce nonlinearities not discussed, the concepts presented below are still applicable.

A wing in an airflow exhibits a force. The horizontal component of this force is drag, the vertical component is lift.

At zero pitch (also known as angle of attack), a symmetrical wing will not generate any significant lift, and an asymmetrical wing will generate some amount of lift. However, by decreasing the pitch, it is possible to get zero lift with an asymmetrical wing. The exemplary control system is applicable to multirotors with swashplates.

### Forces acting on a multirotor aircraft

Although described with respect to quadcopters, these concepts can be extended to 6-rotor (hexacopters), 8-rotor (octocopters) and N-rotor multirotor vehicles, where N is an integer larger than one. These concepts apply to 2-rotor and 3-rotor vehicles, but with some modifications. The special cases will also be examined.

Figure 3 illustrates a naming convention used in the control system derivation with respect to the right rotor as an example. The right, left, forward, and back rotor sides are labeled R, L, F and B respectively. The blades on the rotor are rotating counterclockwise (CCW).

There is lift and drag along the entire length of the blade. The outer portion of the blade generates more lift and drag due to the fact that the outside of the blade has a higher airspeed (and therefore more airflow). To get the resultant lift and resultant drag forces, one can compute the integral of the lift and the drag per area, respectively. With asymmetric blade profiles, the position of resultant lift and the position of resultant drag can differ based on pitch - this can be modeled to improve the exemplary control system described.

As noted above, the lift and drag for any specific phase of a blade's rotation can be simplified to two points. As the blade rotates, these points make a circle (assuming that the lift point and the drag point do not change). This circle can be split into parts, and the forces on each part can be approximated as a single point per part. For the control system described, the circle is split into four quarter-circles.

As a convention, the following diagrams represent all forces acting on the quadcopter as wrenches, a combination of a force and a force couple. The force will be acting on the center of the quadcopter, and the force couple will be acting about the center of the quadcopter.

The drag and lift forces in Figure 3 can be transformed into the wrenches shown in Figure 4. The force couples in Figure 4 are aligned to the rotor centers, and the directional forces are aligned with the quadcopter center (which is also the center of gravity). This convention makes summation of the forces from different rotors and different sides of a single rotor easier. Another advantage of this convention is that the force couples will rotate the multirotor without affecting positioning, and directional force at the center of gravity (CoG) will shift the multirotor without affecting the rotation.

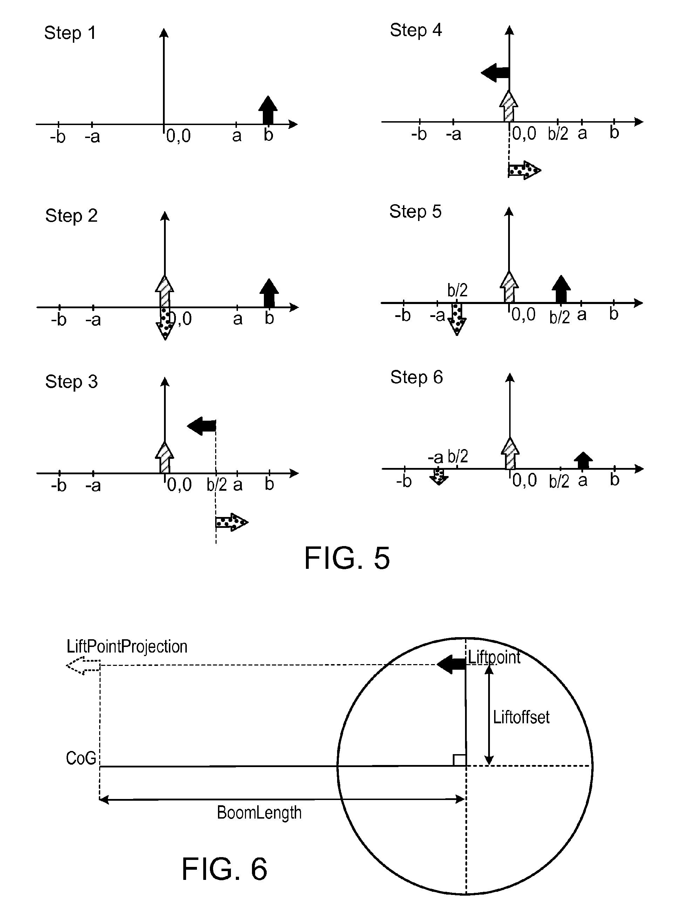

An example of force calculations is described for the blade position in Figure 6. For simplicity, the discussion below will assume that the drag force is acting on the same point as lift, and that the blade has a drag force *Df* and a lift force *Lf* at point *LiftPoint* and that the blade is traveling on the outside (R) of the rotor. This can be represented as a wrench from the conventions outlined above. The translational force magnitudes will have a magnitude of zero for forward-back movement, and a magnitude of |*Df*| for left-right movement. The pitch force will be |*Lf*| * (*LtftOffset*)/(2 * *BoomLength*), the roll force will be -|*Lf*| / 2, and the yaw force will be -|*Df*| * (*LiftOffset*) / (2 * *BoomLength*).

In a similar way, forces can be calculated for blade positions L, R, F and B (see Figure 4) for all rotors.

Figure 6 shows the top-down view of the forces for blade position F.

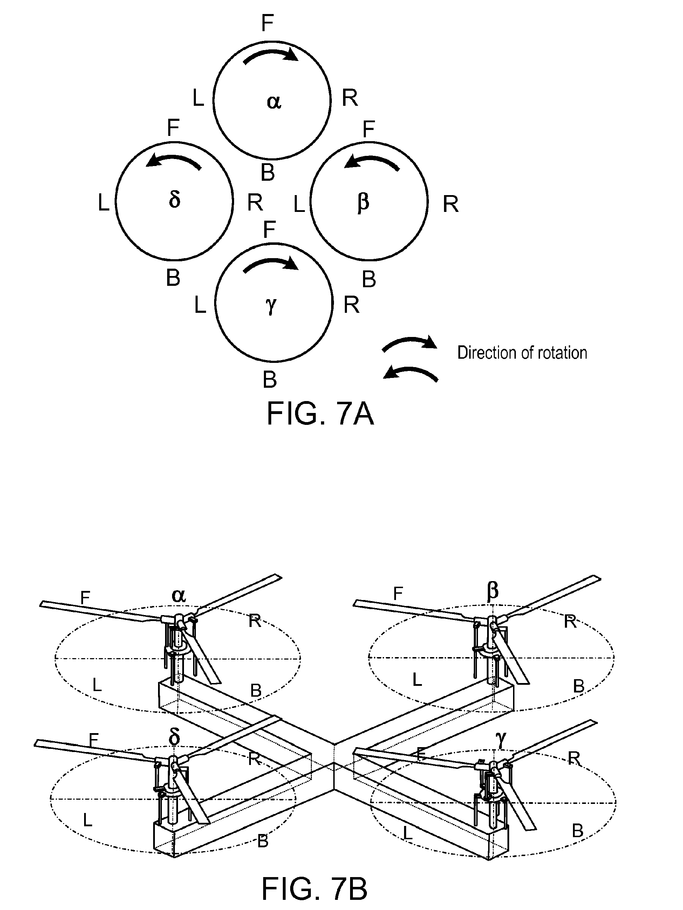

As a convention, the front, right, back, and left rotors are named with Greek letters $\alpha$, $\beta$, $\gamma$, $\delta$ [alpha, beta, gamma, delta]. For example, the right side of the right rotor will be named R$\beta$ or $\beta$R (see Figure 7A).

As outlined above, the forces acting on the rotors (separated into lift and drag) can be approximated as eight points per rotor (four for drag, four for lift), corresponding to the four sections of the rotor (front, back, left, right).

As outlined above, when applied some unit propeller pitch, each quadrant will produce lift and drag forces, which is represented as a mix of six forces (three rotational, three translational). Each rotor has four quadrants, therefore resulting in 4 * 4 = 16 force-producing sections for a quadrotor setup. Each quadrant can produce a total of six unique forces. This relationship is presented below as a 16-by-6 array for lift coefficients and a 16-by-6 array for drag coefficients. Each 6-dimensional column represents all the lift or drag forces for a specific quadrant, if a unit pitch were to be applied to it. Each 16-dimensional row represents a specific force (e.g. forward translational) for all of the quadrants, if a unit pitch were to be applied to all the rotors.

As the number of output forces (3 rotation, 3 translation) is lower or equal to the number of input control dimensions (3 for each rotor with a swashplate), then for two or more rotors, it may be possible to find an input to match the desired output.

For demonstration purposes, a simple linear control system, and a numeric system with a quadratic model are shown. For the linear system, both lift and drag are approximated as linear functions of propeller pitch. Then, if the array is treated as a matrix, then it can be multiplied by a vector of pitches to find the six resultant forces (since force addition is linear) like so: [*M*] [*p*] = [*f*], where *M* is the 16-by-6 matrix, *p* is a 16-dimensional vector of pitches, *f* is the resultant 6-dimensional force vector due to lift. In case *c* is not zero, the matrix becomes $\begin{bmatrix} M & c \end{bmatrix} \begin{bmatrix} p \\ 1 \end{bmatrix} = \begin{bmatrix} f \end{bmatrix}$ .

A similar process can be done for a polynomial system. An equation would look like *Drag(pitch)* = $k_n$ * *pitch*$^n$

$k_2$ * *pitch*$^2$ + $k_1$ * *pitch* + *c*. Then, $\begin{bmatrix} M_n & \cdots & M_1 & M_2 & c \end{bmatrix} \begin{bmatrix} p^n \\ \vdots \\ p^2 \\ p \\ 1 \end{bmatrix} = \begin{bmatrix} f \end{bmatrix}$ (assuming c is not zero), where the M matrices are the derived 16-by-6 matrices, $p^n$, $p^2$ are a 16-dimensional vector of pitches element-wise raised to the power of n and squared, respectively, and *f* is the resultant 6-dimensional vector due to drag.

In practice, the vector *f* is a known desired set of forces, and the vector of pitches *p* is unknown. A typical control system will be concerned with using a solution to the above equation (a solution can be symbolic, numeric, look-up table, or anything that provides satisfactory results). Note that a simple matrix inversion will not guarantee a correct result, since the elements of the vector $\begin{bmatrix} p^n \\ \vdots \\ p^2 \\ p \\ 1 \end{bmatrix}$ are not independent. Approaches for solving multivariate polynomial equations can solve the given equation, as well as other approaches to solving systems of equations. Any known approach (numeric, machine learning, symbolic, Gröbner basis, etc.) should be able to produce results. All of the above can also be generalized to *N* rotors by calculating 4*N*-by-6 matrices for lift and drag. Given that N is three or larger, it is likely that there is an infinite number of solutions to the equations. To select a particular solution, either heuristics, optimization for a parameter (such as minimum distance from current input or minimum cumulative absolute pitch), or another approach may be used.

Using a basic quadratic model for demonstration purposes, and not based on any real airfoil, the following two matrices represent $M_1$ and $M_2$ for a sample 2-rotor aircraft.

$M_1$ *matrix for a two-rotor aircraft*

$$M_2 = \begin{bmatrix}
0 & Df & 0 & 0 & 0 & \dfrac{Df \cdot LiftOffset}{2\,BoomLength} \\[2ex]
-Df & 0 & 0 & 0 & 0 & \dfrac{Df(-LiftOffset - BoomLength)}{2\,BoomLength} \\[2ex]
0 & -Df & 0 & 0 & 0 & \dfrac{Df \cdot LiftOffset}{2\,BoomLength} \\[2ex]
Df & 0 & 0 & 0 & 0 & \dfrac{Df(LiftOffset - BoomLength)}{2\,BoomLength} \\[2ex]
0 & -Df & 0 & 0 & 0 & \dfrac{Df \cdot LiftOffset}{2\,BoomLength} \\[2ex]
Df & 0 & 0 & 0 & 0 & \dfrac{Df(BoomLength - LiftOffset)}{2\,BoomLength} \\[2ex]
0 & Df & 0 & 0 & 0 & \dfrac{Df \cdot LiftOffset}{2\,BoomLength} \\[2ex]
-Df & 0 & 0 & 0 & 0 & \dfrac{Df(LiftOffset + BoomLength)}{2\,BoomLength}
\end{bmatrix}$$

*M*$_2$ *matrix for a two-rotor aircraft.*

If sample unit values are used, then the two matrices above can be transformed into numeric form. In the samples below, *BoomLength* is 1.0, *LiftOffset* and *DragOf fset* are both 0.4.

$$\begin{bmatrix} 0 & 0 & 0 & 0 & 0 & 0 & 0 & 0 \\ 0 & 0 & 0 & 0 & 0 & 0 & 0 & 0 \\ 1 & 1 & 1 & 1 & 1 & 1 & 1 & 1 \\ 0.7 & 0.5 & 0.3 & 0.5 & -0.3 & -0.5 & -0.7 & -0.5 \\ 0.0 & -0.2 & 0.0 & 0.2 & 0.0 & -0.2 & 0.0 & 0.2 \\ 0.0 & 0.0 & 0.0 & -0.0 & 0.0 & 0.0 & 0.0 & 0.0 \end{bmatrix}$$

*Numeric $M_1$ matrix for a sample two-rotor aircraft*

$$\begin{bmatrix} -1 & 0 & 1 & 0 & 1 & 0 & -1 & 0 \\ 0 & 1 & 0 & -1 & 0 & -1 & 0 & 1 \\ 0 & 0 & 0 & 0 & 0 & 0 & 0 & 0 \\ 0.0 & 0.0 & 0.0 & 0.0 & -0.0 & 0.0 & -0.0 & -0.0 \\ -0.0 & 0.0 & 0.0 & 0.0 & 0.0 & 0.0 & -0.0 & 0.0 \\ 0.7 & 0.2 & -0.3 & 0.2 & 0.3 & -0.2 & -0.7 & -0.2 \end{bmatrix}$$

*Numeric $M_2$ matrix for a sample two-rotor aircraft*

The following figures are the transposed matrices for the 4-rotor configuration presented. Some of the matrices are transposed for the purpose of readability.

*Table 1. Symbolic drag matrix for a quadcopter, transposed for easier viewing*

$$
\begin{bmatrix}
-Df & 0 & 0 & 0 & 0 & \dfrac{Df\,(LiftOffset + BoomLength)}{2\,BoomLength} \\[2em]
0 & Df & 0 & 0 & 0 & \dfrac{Df\,LiftOffset}{2\,BoomLength} \\[2em]
Df & 0 & 0 & 0 & 0 & -\dfrac{Df\,(BoomLength - LiftOffset)}{2\,BoomLength} \\[2em]
0 & -Df & 0 & 0 & 0 & \dfrac{Df\,LiftOffset}{2\,BoomLength} \\[2em]
Df & 0 & 0 & 0 & 0 & -\dfrac{Df\,LiftOffset}{2\,BoomLength} \\[2em]
0 & -Df & 0 & 0 & 0 & -\dfrac{Df\,(LiftOffset + BoomLength)}{2\,BoomLength} \\[2em]
-Df & 0 & 0 & 0 & 0 & -\dfrac{Df\,LiftOffset}{2\,BoomLength} \\[2em]
0 & Df & 0 & 0 & 0 & \dfrac{Df\,(BoomLength - LiftOffset)}{2\,BoomLength} \\[2em]
-Df & 0 & 0 & 0 & 0 & \dfrac{Df\,(LiftOffset - BoomLength)}{2\,BoomLength} \\[2em]
0 & Df & 0 & 0 & 0 & \dfrac{Df\,LiftOffset}{2\,BoomLength} \\[2em]
Df & 0 & 0 & 0 & 0 & -\dfrac{Df\,(-LiftOffset - BoomLength)}{2\,BoomLength} \\[2em]
0 & -Df & 0 & 0 & 0 & \dfrac{Df\,LiftOffset}{2\,BoomLength} \\[2em]
Df & 0 & 0 & 0 & 0 & -\dfrac{Df\,LiftOffset}{2\,BoomLength} \\[2em]
0 & -Df & 0 & 0 & 0 & -\dfrac{Df\,(LiftOffset - BoomLength)}{2\,BoomLength} \\[2em]
-Df & 0 & 0 & 0 & 0 & -\dfrac{Df\,LiftOffset}{2\,BoomLength} \\[2em]
0 & Df & 0 & 0 & 0 & \dfrac{Df\,(-LiftOffset - BoomLength)}{2\,BoomLength}
\end{bmatrix}
$$

$$
\begin{bmatrix}
0 & 0 & Lf & \dfrac{Lf\,(LiftOffset + BoomLength)}{2\,BoomLength} & 0 & 0 \\[2mm]
0 & 0 & Lf & \dfrac{Lf}{2} & -\dfrac{Lf\,LiftOffset}{2\,BoomLength} & 0 \\[2mm]
0 & 0 & Lf & \dfrac{Lf\,(BoomLength - LiftOffset)}{2\,BoomLength} & 0 & 0 \\[2mm]
0 & 0 & Lf & \dfrac{Lf}{2} & \dfrac{Lf\,LiftOffset}{2\,BoomLength} & 0 \\[2mm]
0 & 0 & Lf & \dfrac{Lf\,LiftOffset}{2\,BoomLength} & -\dfrac{Lf}{2} & 0 \\[2mm]
0 & 0 & Lf & 0 & -\dfrac{Lf\,(LiftOffset + BoomLength)}{2\,BoomLength} & 0 \\[2mm]
0 & 0 & Lf & -\dfrac{Lf\,LiftOffset}{2\,BoomLength} & -\dfrac{Lf}{2} & 0 \\[2mm]
0 & 0 & Lf & 0 & -\dfrac{Lf\,(BoomLength - LiftOffset)}{2\,BoomLength} & 0 \\[2mm]
0 & 0 & Lf & \dfrac{Lf\,(LiftOffset - BoomLength)}{2\,BoomLength} & 0 & 0 \\[2mm]
0 & 0 & Lf & -\dfrac{Lf}{2} & -\dfrac{Lf\,LiftOffset}{2\,BoomLength} & 0 \\[2mm]
0 & 0 & Lf & \dfrac{Lf\,(-LiftOffset - BoomLength)}{2\,BoomLength} & 0 & 0 \\[2mm]
0 & 0 & Lf & -\dfrac{Lf}{2} & \dfrac{Lf\,LiftOffset}{2\,BoomLength} & 0 \\[2mm]
0 & 0 & Lf & \dfrac{Lf\,LiftOffset}{2\,BoomLength} & \dfrac{Lf}{2} & 0 \\[2mm]
0 & 0 & Lf & 0 & -\dfrac{Lf\,(LiftOffset - BoomLength)}{2\,BoomLength} & 0 \\[2mm]
0 & 0 & Lf & -\dfrac{Lf\,LiftOffset}{2\,BoomLength} & \dfrac{Lf}{2} & 0 \\[2mm]
0 & 0 & Lf & 0 & -\dfrac{Lf\,(-LiftOffset - BoomLength)}{2\,BoomLength} & 0
\end{bmatrix}
$$

*Symbolic lift matrix for a quadcopter, transposed for easier viewing.*

If sample values are added, a numeric matrix can be obtained. In the samples below, *BoomLength* is 1.0, *LiftOffset* and *DragOf fset* are both 0.4.

$$\begin{bmatrix} -1 & 0 & 1 & 0 & 1 & 0 & -1 & 0 & -1 & 0 & 1 & 0 & 1 & 0 & -1 & 0 \\ 0 & 1 & 0 & -1 & 0 & -1 & 0 & 1 & 0 & 1 & 0 & -1 & 0 & -1 & 0 & 1 \\ 0 & 0 & 0 & 0 & 0 & 0 & 0 & 0 & 0 & 0 & 0 & 0 & 0 & 0 & 0 & 0 \\ 0.0 & 0.0 & 0.0 & 0.0 & 0.0 & 0.0 & -0.0 & 0.0 & -0.0 & -0.0 & -0.0 & 0.0 & 0.0 & 0.0 & -0.0 & 0.0 \\ -0.0 & 0.0 & 0.0 & 0.0 & 0.0 & 0.0 & -0.0 & 0.0 & -0.0 & 0.0 & 0.0 & 0.0 & 0.0 & 0.0 & 0.0 & 0.0 \\ 0.7 & 0.2 & -0.3 & 0.2 & -0.2 & -0.7 & -0.2 & 0.3 & -0.3 & 0.2 & 0.7 & 0.2 & -0.2 & 0.3 & -0.2 & -0.7 \end{bmatrix}$$

*Numeric drag matrix for a quadcopter. Not transposed.*

$$\begin{bmatrix} 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 1 & 1 & 1 & 1 & 1 & 1 & 1 & 1 & 1 & 1 & 1 & 1 & 1 & 1 & 1 & 1 \\ 0.7 & 0.5 & 0.3 & 0.5 & 0.2 & 0.0 & -0.2 & 0.0 & -0.3 & -0.5 & -0.7 & -0.5 & 0.2 & 0.0 & -0.2 & 0.0 \\ 0.0 & -0.2 & 0.0 & 0.2 & -0.5 & -0.7 & -0.5 & -0.3 & 0.0 & -0.2 & 0.0 & 0.2 & 0.5 & 0.3 & 0.5 & 0.7 \\ 0.0 & 0.0 & 0.0 & -0.0 & 0.0 & 0.0 & 0.0 & 0.0 & 0.0 & 0.0 & 0.0 & 0.0 & -0.0 & -0.0 & 0.0 & -0.0 \end{bmatrix}$$

*Numeric lift matrix for a quadcopter. Not transposed.*

The script with which the matrices have been generated can be found in the appendix.

Additional constraints

There is an additional constraint on the system of equations - the four quadrants of each rotor are not independent, as they are linked by a 3DoF swashplate. The dependency for each rotor can be described by a matrix. For a 120° CCPM mix, the matrix is below. More details can be found in the "Linear control" section below.

$$\begin{bmatrix} -1 & 0 & 1 \\ 0 & -1 & 1 \\ 1 & 0 & 1 \\ 0 & 1 & 1 \end{bmatrix}$$

*The columns of the matrix indicate forward, right, and collective logical vectors. The rows indicate F, R, B, and L parts of the rotor.*

In addition, a swashplate has a limited range of motion, putting a lower and upper bound on the set of rotor pitches. Additional constrains may be present, depending on the design of the aircraft.

-Heuristics and example pitch cycles

Several control patterns can be intuitively described and used without solving the equations directly.

*Control patterns with same-sign pitch*

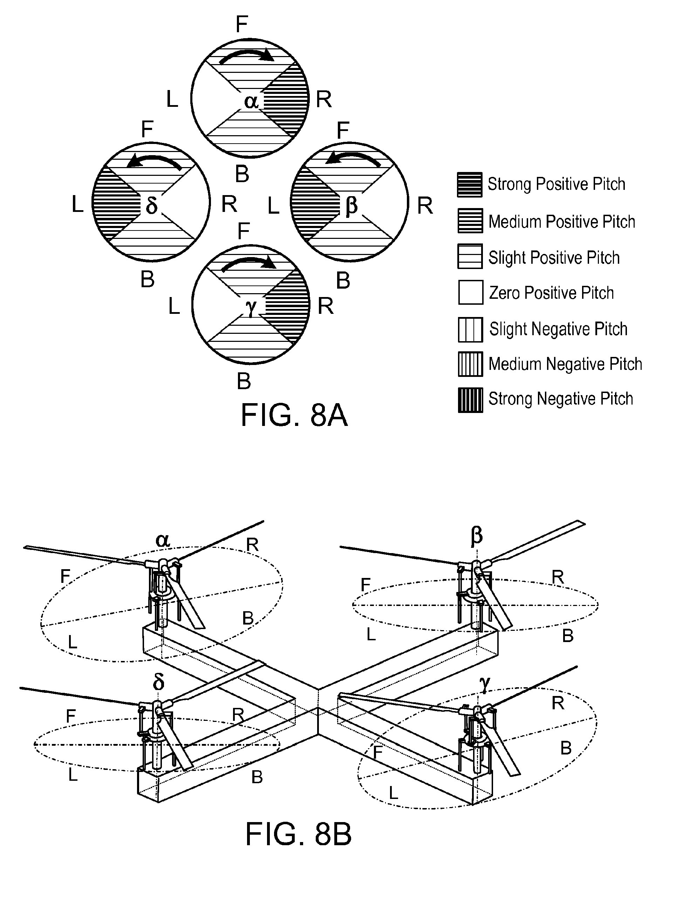

Figure 8A shows a pitch cycle for each blade 122 of each rotor 112, 114, 116, 118 through its revolution and Figure 8B shows the rotors 112, 114, 116, 118 at an instant during this pitch cycle. The pitch cycle results in forward motion of the quadcopter 100. Left and right rotors 114 and 118 have similar pitch cycles and a CCW direction of rotation. Control inputs from central body 110 vary the blades of the rotors 114, 118 to have zero pitch on the right R, slight positive pitch in the front F, medium positive pitch on the left L, and slight positive pitch at the back B. Front and back rotors 112 and 116 have similar pitch cycles and a CW direction of rotation. Control inputs from central body 110 vary the blades of the rotors 112, 116 to have medium positive pitch on the right R, slight positive pitch in the front F, zero pitch on the left L, and slight positive pitch at the back B. The resulting drag forces from the front-rear rotors 112, 116 cancel the drag forces from left-right rotors 114, 118, while maintaining a lift force.

In order to achieve this swash pattern with the linear approximation, we can use the vector [n, 2n, n, 0, n, 0, n, 2n, n, 2n, n, 0, n, 0, n, 2n], where n is a real number greater than 0. For this example, n will equal 1. The vector then becomes [1, 2, 1, 0, 1, 0, 1, 2, 1, 2, 1, 0, 1, 0, 1, 2]. Multiplying the wrench matrix by this vector gives the vector [0 , 8*Df, 16*Lf, 0, 0, 0] - meaning that there is zero translation right or left, some translation forward, some lift upwards, zero yaw, zero pitch or zero roll.

This also works with the 12-dimensional matrix, with the vector [0, -1, 1,0, 1, 1, 0, -1, 1, 0, 1, 1]. The result is an identical [0 , 8*Df, 16*Lf, 0, 0, 0].

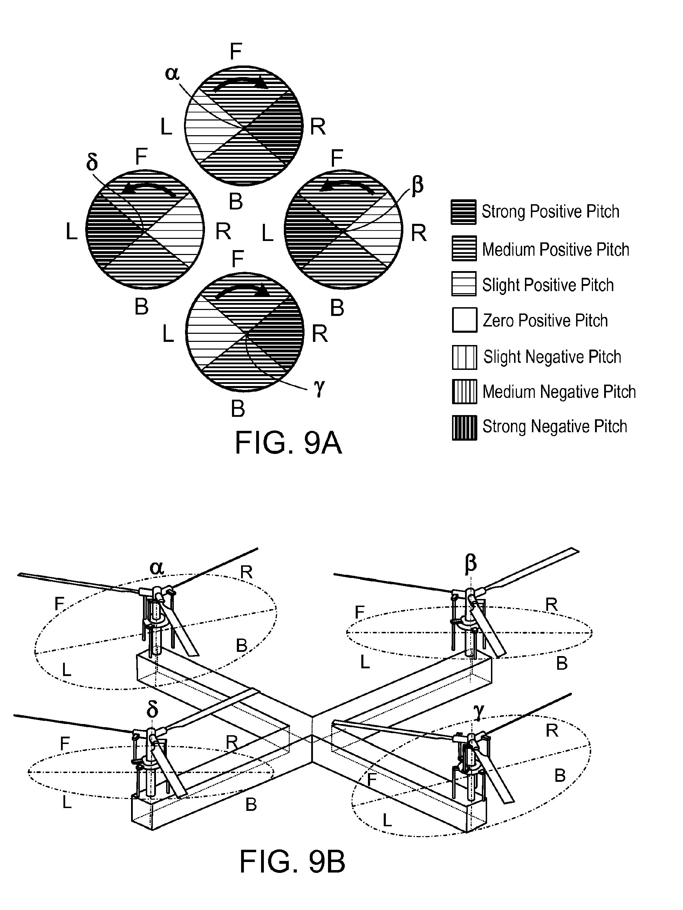

Figure 9A shows a pitch cycle 110 for each blade 122 of each rotor 112, 114, 116, 118 and Figure 9B shows the rotors 112, 114, 116, 118 at an instant during this pitch cycle 120. As in Figure 8A, left and right rotors 114 and 118 have similar pitch cycles and a CCW direction of rotation. The pitch cycle 110 results in forward motion of the quadcopter 100 as well as increased lift compared to the previous cycle. Control inputs from central body 110 vary the blades of the rotors 114, 118 to have slight positive pitch on the right R, medium positive pitch in the front F, strong positive pitch on the left L, and medium positive pitch at the back B. Front and back rotors 14 and 18 have similar pitch cycles and a CW direction of rotation. Control inputs from central body 110 vary the blades of the rotors 112, 116 to have strong positive pitch on the right R, medium positive pitch in the front F, slight pitch on the left L, and medium positive pitch at the back B. The resulting drag forces from the front-rear rotors 112, 116 cancel the drag forces from left-right rotors 114, 118, while maintaining a lift force.

*Control patterns with mixed-sign pitch*

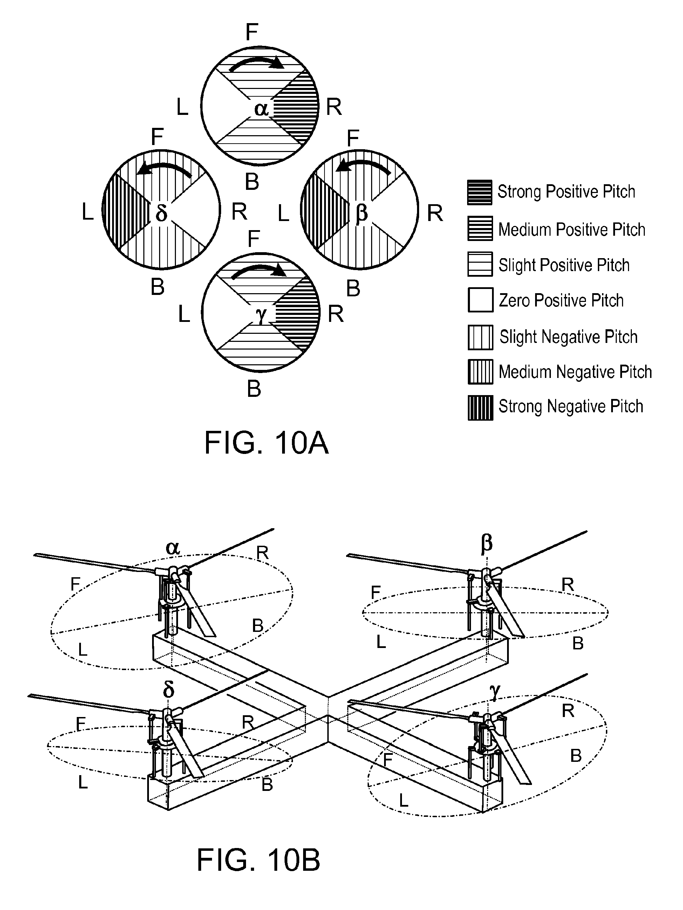

Non-linear techniques may be applied in order to have mixed-sign pitch values. One such technique is a generation of sideways translational force without generating significant lift. Figure 10A shows a pitch cycle 120 for each blade 122 of each rotor 112, 114, 116, 118 and Figure 10B shows the rotors 112, 114, 116, 118 at an instant during this pitch cycle 120. As in Figures 8A and 9A, left and right rotors 114 and 118 have similar pitch cycles and a CCW direction of rotation. The pitch cycle 120 results in a sideways translational force without generating significant lift. This pattern may be used to maneuver quadcopter 100 on the ground, or to perform advanced acrobatic techniques (in particular, given sufficiently powerful motors, hovering without movement at a 90 degree angle with respect to ground). Control inputs from central body 110 vary the blades of the rotors 114, 118 to have zero pitch on the right R, sweeping around to slightly negative pitch in the front F and medium negative pitch on the left L, and slight negative pitch at the back B. Front and back rotors 14 and 18 have similar pitch cycles and a CW direction of rotation 104 identical to that of cycle shown in Figure 4A. That is, rotors 14, to have medium positive pitch on the right R, slight positive pitch in the front F, zero pitch on the left L, and slight positive pitch at the back B.

A problem common to multirotors is their inability to generate yaw thrust while producing zero lift. This problem extends to 1D variable-pitch multirotor s as well.

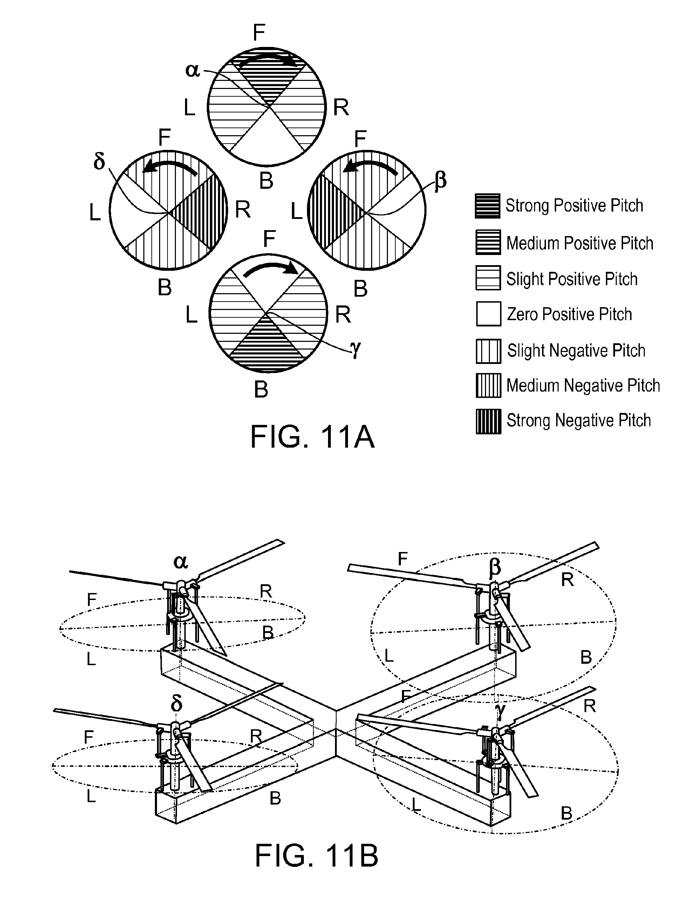

Figure 11A shows a pitch cycle 130 for each blade 122 of each rotor 112, 114, 116, 118 and Figure 11B shows the rotors 112, 114, 116, 118 at an instant during this pitch cycle 130. Unlike the previous pitch cycles shown, each rotor has a different pitch pattern, resulting in yaw forces, but no significant lift forces. This may be useful in fast controlled descent situations and when maneuvering on the ground. Rotor 112 rotates from slight positive, medium positive, slight positive, and zero pitch moving from R through F, L, and B. Rotor 114 has medium negative, slight negative, zero and slight negative pitch, rotor 116 has medium positive, zero, medium positive, and medium positive pitches, while rotor 118 has zero, slight negative, medium negative, and slight negative pitches.

While the pitch cycles described above are shown by way of illustration, other pitch cycles for quadcopter 100 are within the scope of this description.

Linear control

As outlined above, the forces on a multirotor can be presented as two 4 * *N*-by-6 matrices, (where *N* is the number of rotors), one for lift and the other for drag. If the performance of drag and lift versus pitch is approximated as a linear relationship instead, then the equations form a single matrix equation.

This approximation will not hold for mixed sign pitches. For all-negative pitches, the drag components of the matrix need to be multiplied by negative one for the approximation to hold.

The 16 columns represent the rotor position. This document's convention is that the first 3 rows are the 3 translational forces (right/left, forward/back, lift), and the second 3 rows are the 3 rotational forces (yaw, pitch, roll).

$$\begin{bmatrix}
-Df & 0 & Df & 0 & Df & 0 \\[4pt]
0 & Df & 0 & -Df & 0 & -Df \\[4pt]
Lf & Lf & Lf & Lf & Lf & Lf \\[4pt]
\dfrac{Df(-DragOffset-BoomLength)}{2\,BoomLength} & -\dfrac{Df\,DragOffset}{2\,BoomLength} & \dfrac{Df(BoomLength-DragOffset)}{2\,BoomLength} & \dfrac{Df\,DragOffset}{2\,BoomLength} & \dfrac{Df\,DragOffset}{2\,BoomLength} & \dfrac{Df(DragOffset+BoomLength)}{2\,BoomLength} \\[10pt]
\dfrac{Lf(LiftOffset+BoomLength)}{2\,BoomLength} & \dfrac{Lf}{2} & \dfrac{Lf(BoomLength-LiftOffset)}{2\,BoomLength} & \dfrac{Lf}{2} & \dfrac{Lf\,LiftOffset}{2\,BoomLength} & 0 \\[10pt]
0 & \dfrac{Lf\,LiftOffset}{2\,BoomLength} & 0 & -\dfrac{Lf\,LiftOffset}{2\,BoomLength} & \dfrac{Lf}{2} & \dfrac{Lf(LiftOffset+BoomLength)}{2\,BoomLength}
\end{bmatrix}$$

$$\begin{bmatrix}
-Df & 0 & -Df & 0 & Df & 0 \\[4pt]
0 & Df & 0 & Df & 0 & -Df \\[4pt]
Lf & Lf & Lf & Lf & Lf & Lf \\[4pt]
\dfrac{Df\,DragOffset}{2\,BoomLength} & \dfrac{Df(DragOffset-BoomLength)}{2\,BoomLength} & \dfrac{Df(BoomLength-DragOffset)}{2\,BoomLength} & -\dfrac{Df\,DragOffset}{2\,BoomLength} & \dfrac{Df(-DragOffset-BoomLength)}{2\,BoomLength} & \dfrac{Df\,DragOffset}{2\,BoomLength} \\[10pt]
-\dfrac{Lf\,LiftOffset}{2\,BoomLength} & 0 & \dfrac{Lf(LiftOffset-BoomLength)}{2\,BoomLength} & -\dfrac{Lf}{2} & \dfrac{Lf(-LiftOffset-BoomLength)}{2\,BoomLength} & -\dfrac{Lf}{2} \\[10pt]
\dfrac{Lf}{2} & \dfrac{Lf(BoomLength-LiftOffset)}{2\,BoomLength} & 0 & \dfrac{Lf\,LiftOffset}{2\,BoomLength} & 0 & -\dfrac{Lf\,LiftOffset}{2\,BoomLength}
\end{bmatrix}$$

$$\begin{bmatrix}
Df & 0 & -Df & 0 \\[4pt]
0 & -Df & 0 & Df \\[4pt]
Lf & Lf & Lf & Lf \\[4pt]
\dfrac{Df\,DragOffset}{2\,BoomLength} & \dfrac{Df(DragOffset-BoomLength)}{2\,BoomLength} & \dfrac{Df\,DragOffset}{2\,BoomLength} & \dfrac{Df(DragOffset+BoomLength)}{2\,BoomLength} \\[10pt]
\dfrac{Lf\,LiftOffset}{2\,BoomLength} & 0 & -\dfrac{Lf\,LiftOffset}{2\,BoomLength} & 0 \\[10pt]
-\dfrac{Lf}{2} & \dfrac{Lf(LiftOffset-BoomLength)}{2\,BoomLength} & -\dfrac{Lf}{2} & \dfrac{Lf(-LiftOffset-BoomLength)}{2\,BoomLength}
\end{bmatrix}$$

*Wrench force matrix with independent rotor position control.*

In the wrench force matrix with independent rotor position control, the wrenches are presented in a consistent format. The 16 rows are αF, αR, αB, αL, βF, βR, βB, βL, γF, γR, γB, γL, δF, δR, δB, δL, in that order. The rows correspond to translational force right, translational force forward, translational lift, yaw force, pitch force, and roll force. When multiplied by a 16-element vector with elements larger or equal to zero (representing the sixteen pitches), the result is the 6D translational and rotational force vector. Note that for this matrix, to get the three correct drag-related forces, an absolute (therefore zero or positive) pitch value is required.

When putting the data into matrix form, there is an assumption of linearity. In case of the wrench force matrix with independent rotor position control, it is that drag and lift scale linearly without offset based on the pitch of a blade. In other words, if a pitch of a rotor slice is increased by 2, then the lift and drag from that slice are going to double as well. This is roughly true when 0 <= *pitch* < *stall_pitch*. However, lift is negative for negative pitch, while drag is positive. Therefore, the rows that depend on lift only (lift, roll and pitch) can work with negative pitch without modification. The rows that are affected by drag (yaw, and translational forces) need the absolute value of pitch.

Due to the absolute vs. signed value discrepancy, the output has to be checked for consistency. If the output values are all greater or equal to zero, then the output is valid. If the output values are all less than or equal to zero, then a sign flip on the cyclic controls is required. If the output values have mixed signs, then more advanced techniques are required than the then the linear matrix approach described below. Some of these advanced techniques are covered later in the document.

The calculations above assume four sections per rotor, although a single rotor has 3 degrees of freedom. A logical "forward-back", "left-right", and "up-down" 3-dimensional cyclic-collective vector space is the most intuitive representation. Matrix 2 provides the mixing from a 3-dimensional cyclic-collective space into the 4-rotor-sides vector space that is used in the above sections of the document.

$$\begin{bmatrix} -1 & 0 & 1 \\ 0 & -1 & 1 \\ 1 & 0 & 1 \\ 0 & 1 & 1 \end{bmatrix}$$

*The columns of the matrix indicate forward, right, and collective logical vectors. The rows indicate F, R, B, and L parts of the rotor.*

Matrix 2

These servos can be mixed from a logical "forward-back", "left-right", and "up-down" 3-dimensional cyclic-collective vector space. Matrix 3 provides a conversion between the two spaces.

$$\begin{bmatrix} 1 & 0 & 1 \\ -\cos(60) & \sin(60) & 1 \\ -\cos(60) & -\sin(60) & 1 \end{bmatrix}$$

*The columns indicate forward, right, and collective logical vectors. The rows indicate the 3 servos in a typical 120° swashplate design*

Matrix 3.

It is, however, easier to first convert the 4-region space into the logical cyclic-collective vector space, and then multiply the matrices to get the conversion.

For a quadcopter (four rotors), this matrix is expanded as follows:

$$\begin{bmatrix}
-1 & 0 & 1 & 0 & 0 & 0 & 0 & 0 & 0 & 0 & 0 & 0 \\
0 & -1 & 1 & 0 & 0 & 0 & 0 & 0 & 0 & 0 & 0 & 0 \\
1 & 0 & 1 & 0 & 0 & 0 & 0 & 0 & 0 & 0 & 0 & 0 \\
0 & 1 & 1 & 0 & 0 & 0 & 0 & 0 & 0 & 0 & 0 & 0 \\
0 & 0 & 0 & -1 & 0 & 1 & 0 & 0 & 0 & 0 & 0 & 0 \\
0 & 0 & 0 & 0 & -1 & 1 & 0 & 0 & 0 & 0 & 0 & 0 \\
0 & 0 & 0 & 1 & 0 & 1 & 0 & 0 & 0 & 0 & 0 & 0 \\
0 & 0 & 0 & 0 & 1 & 1 & 0 & 0 & 0 & 0 & 0 & 0 \\
0 & 0 & 0 & 0 & 0 & 0 & -1 & 0 & 1 & 0 & 0 & 0 \\
0 & 0 & 0 & 0 & 0 & 0 & 0 & -1 & 1 & 0 & 0 & 0 \\
0 & 0 & 0 & 0 & 0 & 0 & 1 & 0 & 1 & 0 & 0 & 0 \\
0 & 0 & 0 & 0 & 0 & 0 & 1 & 1 & 0 & 0 & 0 & 0 \\
0 & 0 & 0 & 0 & 0 & 0 & 0 & 0 & 0 & -1 & 0 & 1 \\
0 & 0 & 0 & 0 & 0 & 0 & 0 & 0 & 0 & 0 & -1 & 1 \\
0 & 0 & 0 & 0 & 0 & 0 & 0 & 0 & 0 & 1 & 0 & 1 \\
0 & 0 & 0 & 0 & 0 & 0 & 0 & 0 & 0 & 0 & 1 & 1
\end{bmatrix}$$

*Expanded matrix for converting from 4 quadrants to 3DoF logical representation.*

Matrix 4

Since there are only three true degrees of freedom per rotor, there are 4 * 3 = 12 degrees of freedom in the swashplate setup (ignoring throttle RPM input, since it is irrelevant for these concepts).

Multiplying Matrix 1 by Matrix 4 results in Matrix 5 that corresponds to the logical cyclic-collective controls (up-down, left-right, forward-back). Matrix 5 has rank 6. This means that it contains six linearly independent control vectors - and if put into reduced row echelon form, there will be six linearly independent basis vectors in the first six columns.

*Wrench force matrix with swash logical tilt control*

Matrix 5

*Linear Inverse*

Since Matrix 5 is not a square matrix, a true inverse does not exist. When using the heuristics outlined above and combining them into a single matrix, the result is Matrix 6. Multiplying Matrix 5 by Matrix 6 results in a diagonal matrix (a matrix with no non-zero entries outside the main diagonal).

$$\begin{bmatrix} 1 & 0 & 0 & 0 & 0 & 0 \\ 0 & -1 & 0 & 0 & 0 & 0 \\ 0 & 0 & 1 & -1 & 1 & 0 \\ -1 & 0 & 0 & 0 & 0 & 0 \\ 0 & 1 & 0 & 0 & 0 & 0 \\ 0 & 0 & 1 & 1 & 0 & 1 \\ 1 & 0 & 0 & 0 & 0 & 0 \\ 0 & -1 & 0 & 0 & 0 & 0 \\ 0 & 0 & 1 & -1 & -1 & 0 \\ -1 & 0 & 0 & 0 & 0 & 0 \\ 0 & 1 & 0 & 0 & 0 & 0 \\ 0 & 0 & 1 & 1 & 0 & -1 \end{bmatrix}$$

Matrix 6

Matrix 7 can be used to scale the output in order to get an identity matrix.

$$\begin{bmatrix} \dfrac{1}{8\,Df} & 0 & 0 & 0 & 0 & 0 \\[2ex] 0 & \dfrac{1}{8\,Df} & 0 & 0 & 0 & 0 \\[2ex] 0 & 0 & \dfrac{1}{16\,Lf} & 0 & 0 & 0 \\[2ex] 0 & 0 & 0 & \dfrac{BoomLength}{8\,Df\,DragOffset} & 0 & 0 \\[2ex] 0 & 0 & 0 & 0 & \dfrac{1}{4\,Lf} & 0 \\[2ex] 0 & 0 & 0 & 0 & 0 & \dfrac{1}{4\,Lf} \end{bmatrix}$$

*Formalizing coefficients for Matrix 6*

Matrix 7

Scaling the coefficients of Matrix 6 through Matrix 7 results in Matrix 8. This matrix is a partial, right inverse to Matrix 5. This means that multiplying this matrix by Matrix 5 will yield an identity matrix. Therefore, while Matrix 5 outputs forces when given pitches, Matrix 8 will output pitches when given forces.

$$\begin{bmatrix}
\dfrac{1}{8\,Df} & 0 & 0 & 0 & 0 & 0 \\[2ex]
0 & -\dfrac{1}{8\,Df} & 0 & 0 & 0 & 0 \\[2ex]
0 & 0 & \dfrac{1}{16\,Lf} & -\dfrac{BoomLength}{8\,Df\,DragOffset} & \dfrac{1}{4\,Lf} & 0 \\[2ex]
-\dfrac{1}{8\,Df} & 0 & 0 & 0 & 0 & 0 \\[2ex]
0 & \dfrac{1}{8\,Df} & 0 & 0 & 0 & 0 \\[2ex]
0 & 0 & \dfrac{1}{16\,Lf} & \dfrac{BoomLength}{8\,Df\,DragOffset} & 0 & \dfrac{1}{4\,Lf} \\[2ex]
\dfrac{1}{8\,Df} & 0 & 0 & 0 & 0 & 0 \\[2ex]
0 & -\dfrac{1}{8\,Df} & 0 & 0 & 0 & 0 \\[2ex]
0 & 0 & \dfrac{1}{16\,Lf} & -\dfrac{BoomLength}{8\,Df\,DragOffset} & -\dfrac{1}{4\,Lf} & 0 \\[2ex]
-\dfrac{1}{8\,Df} & 0 & 0 & 0 & 0 & 0 \\[2ex]
0 & \dfrac{1}{8\,Df} & 0 & 0 & 0 & 0 \\[2ex]
0 & 0 & \dfrac{1}{16\,Lf} & \dfrac{BoomLength}{8\,Df\,DragOffset} & 0 & -\dfrac{1}{4\,Lf}
\end{bmatrix}$$

*The result of multiplying Matrix 6 through Matrix 7, yielding a right inverse to Matrix 5.*

Matrix 8

Generalizing to N rotors

The methods described above work for any number of rotors. The following algorithm can be used to generalize this method. Broader generalizations are also possible (to e.g. non-horizontal rotors).

If using a linear approximation:

1. Define a set of axes with a unit of measurement. Let Z be the vertical up-down axis.
2. Define the center of mass, rotor positions relative to the center of mass, their directions of rotation, as well as their (possibly unique) lift and drag points.
3. Select two unit points (if rotors are in-plane with the CoG) or three unit points (if rotors are not on the same plane as the CoG). Position the unit points along the $X, Y$ axes in case of two points, or along the $X, Y$ and Z axes in case of three points.
4. Using the projection methods described above, derive the 6D wrenches aligned to the unit points and the CoG. Do so for the 4 sides of each rotor and for both drag and lift.
5. Put the wrenches into a 6 by $4 * N$ matrix $W$.
6. Multiply W by a matrix that corresponds to swashplate control, thereby reducing the size of the matrix from 6 by $4 * N$ to 6 by $3 * N$. Name the result $L$.
7. Find the rank of matrix $L$. A rank below 6 will mean that the system will not have full rotation and translation freedom.
8. Find a pseudoinverse matrix $M$ to matrix $L$ by either using moore-penrose pseudoinverse, using educated guesses, or any other method. Double-check that $L * M = I$, where $I$ is the identity matrix.

9. Inside the control loop, generate a vector $v$ of size 6 as the wanted force vector. Generate a $3 * N$ vector $r$ by computing $L * v$. The vector $r$ will have the wanted pitch coefficients.

10. Optional. Check the vector $r$ for consistency (all-positive or all-negative coefficients, or using more advanced methods). If it is inconsistent (and the resultant error is likely to be unacceptable), repeat step 9 with a different force vector $v$.

11. Feed the vector of pitches to the swashplate mixer, which then sets the collective and coaxial for each swashplate.

If solving without using a linear approximation:

1. Define a set of axes with a unit of measurement. Let $Z$ be the vertical up-down axis.

2. Define the center of mass, rotor positions relative to the center of mass, their directions of rotation, as well as their (possibly unique) lift and drag points.

3. Create a model of translational forces and moments about the CoG as a function of cyclic and collective of rotors. One approach is described in the sub points.

    a. Find the translational forces and moments about the CoG. Do so for the 4 sides of each rotor and for both drag and lift, given a unit pitch.
    b. Put the wrenches into two 6 by $4 * N$ matrices $W_l$ and $W_d$.

4. Find a method or algorithm that, given an arbitrary set of 3 forces and 3 moments $f$, generates a vector of pitches $p$ such that it satisfies the system in point 3 (or the equations with $W_l$ and $W_d$). Optionally, the algorithm can have an optimization stage to pick a specific solution out of the set of all possible solutions.

    a. The appendix contains an exemplary Matlab script to generate the pitches based on a sample input.

5. Inside the control loop, generate a vector $v$ of size 6 as the wanted force vector. Using the algorithm from step 4, find the desired vector of pitches.

6. Feed the vector of pitches to the swashplate mixer, which then sets the collective and coaxial for each swashplate.

Other concepts

*Autorotation*

Current helicopters can deal with power failure by performing an autorotation maneuver to allow them to land safely.

Multirotors with swashplates can take also take advantage of this mechanism in case of complete engine failure, although a fly-by-wire control system is required. A typical autorotation assumes that the helicopter is in an upright position, and sets negative pitch to the blades. As the helicopter is losing altitude, the blades act as a windmill and gain rotational speed. Just before touchdown, the blade pitch is set positive, and the stored rotational energy generates lift that slows the descent.

In case of a variable pitch multirotor, a similar approach can be used. As the multirotor is losing altitude, the blades can be angled to gain rotational speed. In case of non-horizontal attitude, the blades can be angled in such a way that one side of the multirotor will generate more drag than another, correcting and providing horizontal attitude. Just before touchdown, the blades can be angled to generate lift from the energy stored as rotational speed. In order to ensure horizontal attitude in this part of autorotation, blade pitch can be set to decrease lift on one side of the multirotor and increase lift on another.

In addition, a quadcopter with swashplates is able to lose one motor assembly completely and be able to fly with reduced flight characteristics. To calculate this, go through steps outlined in "Generalizing to N rotors" above, but with one or more of the rotors removed.

A possible enhancement to the ideas explained above is the utilization of stall conditions. Conventionally, stall is avoided due to low lift, high drag and decreased control. However, the concepts above utilize drag as a useful force - the helicopter blades may be put into a temporary stall at a specific phase interval in order to increase drag without unnecessarily increasing lift in order to maximize translational force. However, this behavior would be highly nonlinear and requires further research.

Approximations

The concepts above assume a specific behavior for drag and lift. In the "Linear control" section, they are assumed to both be linear. Better models can be made - although it is impossible to account for all of them, the basic concepts in this document (utilizing asymmetrical drag) will still apply.

For the nonlinearities that are known at design-time (such as average blade performance or rotor articulation), the appropriate compensation can be added as an additional step when calculating required swashplate angles. For the nonlinearities that are either not known (such as various types of blades) or vary (such as airspeed), a feedback control system can be used.

The nonlinearities can exhibit themselves as either a rotational force or a translational force. In modern multirotor vehicles, outside rotational forces are already compensated for by existing feedback control systems - and the additional rotational forces can be accounted for by extending the same methods without requiring new systems. Modern drones with positional tracking (such as GPS systems) have a "position hold" and "waypoint follow" methods of operation. These systems can account for additional translational forces.

Coaxial rotors

Current coaxial rotors share their swashplate control (and the three dimensions of control) between the two rotors. In addition to those three dimensions, there is an extra rod in order to provide differential collective to the top rotor. In this case, such a rotor setup can be treated as a 4D instance for the purposes of deriving the force matrix. Such a rotor will not be able to provide translation without rotation on its own.

A coaxial rotor with independent top and bottom rotor control can provide 6 degrees of freedom and can provide translation as well as the typical roll/pitch/lift/yaw dimensions. Such a coaxial rotor can then be treated as two separate rotors, one on top of the other, for the purposes of deriving the force matrix.

Coaxial rotors can be combined into a multirotor setup. The calculations to derive the force matrix will be similar - the top and the bottom parts of each coaxial rotor are to be treated as separate rotors.

Co-meshing rotors, for the purposes of this document, do not differ from two closely-placed regular helicopter rotors, and can also utilize the concepts in this document.

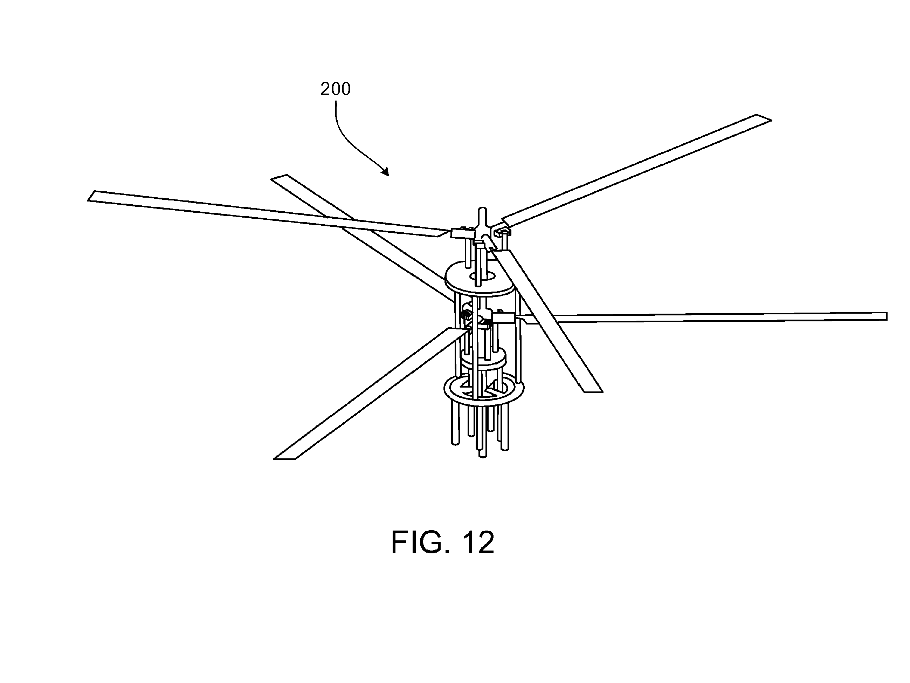

An example of a coaxial rotor 200 with 6DoF control is discussed below in reference to Figure 12.

A coaxial rotor has four degrees of freedom, used for tilting left-right, forward-back, yawing left-right and lifting up-down. It is accomplished by having two separate swash plates plus a pushrod.

For the bottom rotor of a typical coaxial assembly, the design is similar to a regular single-rotor helicopter. Three control rods tilt and move a central non-rotating swashplate component, which, in turn, passes the tilt and rotation to the outer swashplate component that rotates with the speed and direction of the bottom rotor.

To change cyclic and collective of the upper rotor, the outer swashplate component of the bottom rotor has three control rods connected to the lower component of a second swashplate. Note that the control rods are required to rotate with the speed of the lower rotor - doing otherwise would result in a collision between the control rods and the blades. The lower component of the second swashplate rotates in the direction and speed of the lower rotor. The upper component of the second swashplate rotates in the direction and with the speed of the upper rotor.

The upper component of the second swashplate is connected via control rods to a differential mechanism. This mechanism allows for swashplate-like control of cyclic and collective. However, a separate lever (embedded as an inner shaft inside the main rotor shaft), is able to apply or remove extra collective control, thereby allowing different collective on lower and upper rotors.

A 6DoF coaxial rotor must support individual cyclic and collective controls on both rotors, as opposed to typical coaxial rotors that support only individual collective. Modern implementations assume a mechanical approach, although non-mechanical implementations are also possible. If assuming a mechanical approach, then the extra three dimensions of control for the top rotor are passed mechanically, for example with control rods. There are two ways to pass the three control inputs: either through the center of the drive shaft (as the current implementation does for yaw), or outside the lower rotor (as the current implementation does for duplicating the cyclic). Although an implementation with utilizing the space inside the drive shaft is possible, this document will present the alternative implementation instead. Such a coaxial motor design will introduce a third, intermediate, swashplate.

The three control rods that manipulate the upper swash plate pass on the outside of the lower rotor. To do so, they spin with the direction and speed of the lower rotor. In addition, they are be attached to a swashplate in order to pass non-rotating tilt and lift while rotating.

In a typical coaxial helicopter, the upper control rods are passed via the lower swashplate. However, a 6DoF coaxial rotor uses six separate control rods - the upper three control rods cannot be dependent on the lower three control rods. Thus, there is a need for passing the extra control information mechanically without affecting the lower control rods. In addition, any rods passing through the lower rotor are rotating with the direction of the lower rotor. This necessitates a separate swash plate for controlling the upper rotor. One swashplate would use three non-rotating control rods to make three control rods for controlling the lower rotor. A second swashplate would use three non-rotating control rods to make three intermediate control rods for controlling the upper rotor, but rotating with the direction of the lower rotor. The last, third, swashplate would take the intermediate control rods rotating with the direction of the lower rotor and make three control rods for controlling the upper rotor.

In the current implementation the first two swashplates are below the lower rotor. The last swashplate is above the lower rotor. Either the first or the second swashplate is lower than the other. For the purposes of demonstration, suppose the second swashplate is located below the first. Since the first swashplate is controlled by non-rotating control rods and is located above the second swashplate, control rods must somehow be passed through the second swashplate. One method of doing so is passing the control rods through the inner or lower or non-rotating part of the second swashplate.

Systems with less than full rank

Some systems of rotors may have force matrices that do not have full rank - in other words, they cannot independently control all six degrees of freedom. In such cases, solving the system for the reduced number of dimensions will make it possible to create a control system with a reduced freedom of mobility. Considering that aircraft commonly do not have full six degrees of freedom, common control system design will be applicable.

It is possible that despite having full rank, the maximum possible force or torque in a particular direction, or the practical range of a force or torque in a particular direction is small enough to be of little use. In such a case, a control method can be designed as if the system has reduced rank.

System failure modes

A system may be set up in such a way that it would be able to function (possibly with reduced capabilities) with a disabled rotor. One way of creating such a system would be to solve the system of wrench equations for every possible failure mode - in case of a quadcopter, that would include any of the rotors failing, and any two pairs of rotors failing. Then, the system would monitor (passively or actively) for a rotor failure and switching to the new control scheme accordingly. In case of an uncontrollable or unsolved error mode, the system can enter an autorotation mode outlined above.

**In conclusion**

A number of embodiments of the invention have been described. Nevertheless, it will be understood that various modifications may be made without departing from the spirit and scope of the invention. For example, the variable pitch propellers described above have been for quadcopters, or 4-rotor multirotor s. However, these concepts can be extended to 6-rotor (hexacopters), 8-rotor (octocopters) and N-rotor multirotor vehicles, where N is a real number larger than 1. These concepts also apply to 2-rotor and 3-rotor vehicles. Accordingly, other embodiments are within the scope of the following claims.

## **Appendix**

To input the wrench matrix in Maxima or wxMaxima, copy and paste the following lines:

pitchScaler( offset ) := Lf * offset / ( 2 * BoomLength);

yawScaler( offset ) := Df * offset / ( 2 * BoomLength);

mymatrix : matrix(

[ -Df, 0, Df, 0, Df, 0, -Df, 0, -Df, 0, Df, 0, Df, 0, -Df, 0 ],

[ 0, Df, 0, -Df, 0, -Df, 0, Df, 0, Df, 0, -Df, 0, -Df, 0, Df],

[ Lf, Lf, Lf, Lf, Lf, Lf, Lf, Lf, Lf, Lf, Lf, Lf, Lf, Lf, Lf, Lf ],

[ yawScaler( -(BoomLength + DragOffset) ), yawScaler( -DragOffset ), yawScaler( BoomLength - DragOffset ), yawScaler( -DragOffset ), yawScaler( DragOffset ), yawScaler( BoomLength + DragOffset ), yawScaler( DragOffset ), yawScaler( -(BoomLength - DragOffset) ), yawScaler( BoomLength - DragOffset ), yawScaler( -DragOffset ), yawScaler( -(BoomLength + DragOffset) ), yawScaler( -DragOffset ), yawScaler( DragOffset ), yawScaler( -(BoomLength - DragOffset) ), yawScaler( DragOffset ), yawScaler( BoomLength + DragOffset ) ],

[ pitchScaler( BoomLength + LiftOffset ), pitchScaler( BoomLength ), pitchScaler( BoomLength - LiftOffset ), pitchScaler( BoomLength ), pitchScaler( LiftOffset ), pitchScaler( 0 ), pitchScaler( -LiftOffset ), pitchScaler( 0 ), pitchScaler( -(BoomLength - LiftOffset) ), pitchScaler( -BoomLength ), pitchScaler( -(BoomLength + LiftOffset) ), pitchScaler( -BoomLength ), pitchScaler( LiftOffset ), pitchScaler( 0 ), pitchScaler( -LiftOffset ), pitchScaler( 0 ) ],

[ pitchScaler( 0 ), pitchScaler( LiftOffset ), pitchScaler( 0 ), pitchScaler( -LiftOffset ), pitchScaler( BoomLength ), pitchScaler( BoomLength + LiftOffset ), pitchScaler( BoomLength ), pitchScaler( BoomLength - LiftOffset ), pitchScaler( 0 ), pitchScaler( LiftOffset ), pitchScaler( 0 ), pitchScaler( -LiftOffset ), pitchScaler( -BoomLength ), pitchScaler( -(BoomLength - LiftOffset) ), pitchScaler( -BoomLength ), pitchScaler( -(BoomLength + LiftOffset) ) ] )

The Python script to generate a set of wrench matrices from a set of defined rotors.

#written using python 3.4 32-bit

#read positions

#need to know: X, Y, lift point, drag point, CW/CCW rotation

```
#generate 4 points of forces, F R B L
#they're offset by liftpoint or dragpoint from X Y


#then, wrap around the thing in a helper function for scaling the thing


#import sys
#print (sys.version)


#maxima matrix format: matrix( [ a, b ], [c d ] );
# results in:
# [ a b ]
# [ c d ]


from sympy import *
import numpy as np


filepath = "C:/tmp/pythonmatrix.txt"
rotorConfiguration = "quadNumeric"
packageName = "matlab"
liftdragSym = False



def missing_dimension( dim1, dim2 ):
    #expecting 0, 1, or 2 as inputs to dim1 and dim2
    #return whichever number is missing
    #trick: sum of 0 + 1 + 2 = 3, and the missing index is missing from the sum
    return 3 - (dim1 + dim2 )


#this should be a cross product
def calc_wrench( force_position, force_direction, couple_diameter ):
```

```
        result_dir_force = force_direction
        result_couple_force = [ 0, 0, 0 ]


        #old way of calculating things. It's wrong
        if false:
            #split the force into its three components. Work with each separately
            for dimension in range( 3 ):
                #for example, for a force on the X axis, only Y and Z positions are
relevant.
                #Only Y and Z axis rotations may have rotation
                #therefore, this becomes an R2 problem
                magnitude = force_direction[ dimension ]


                for dim2 in range(3):
                    if dim2 == dimension:
                        continue


                    result_couple_force[ missing_dimension(dimension, dim2) ] +=
magnitude * force_position[dim2] / ( 2 * couple_diameter )


        else:
            result_couple_force = np.cross( force_position, force_direction )
            result_couple_force = np.divide( result_couple_force,  ( 2 * couple_diameter
) )


        #order: [drag right, drag Up, lift], [CW yaw, pitch, roll]
        return [ result_dir_force, result_couple_force ]


    def print_matrix( llist ):
        matrixStr = ""
```

```
if packageName == "maxima":
    matrixStr += "matrix( "
    for j in range( 0, len(llist ) ):
        column = llist[j]
        matrixStr += "[ "
        for i in range( 0, len( column ) ):
            matrixStr += str( column[i] )
            if i != len(column)-1:
                matrixStr += ", "

        if j != (len(llist)-1):
            matrixStr += " ], \n"
        else:
            matrixStr += " ]"
    matrixStr += " )"


elif packageName == "mathematica":
    matrixStr += "{ "
    for j in range( 0, len(llist ) ):
        column = llist[j]
        matrixStr += "{ "
        for i in range( 0, len( column ) ):
            matrixStr += str( column[i] )
            if i != len(column)-1:
                matrixStr += ", "

        if j != (len(llist)-1):
            matrixStr += " }, \n"
        else:
```

```
            matrixStr += " }"
        matrixStr += " }"


    elif packageName == "MuPad":
        matrixStr += "matrix( [ "
        for j in range( 0, len(llist ) ):
            column = llist[j]
            matrixStr += "[ "
            for i in range( 0, len( column ) ):
                matrixStr += str( column[i] )
                if i != len(column)-1:
                    matrixStr += ", "

            if j != (len(llist)-1):
                matrixStr += " ], \n"
            else:
                matrixStr += " ] "
        matrixStr += " ] )"


    elif packageName == "matlab":
        matrixStr += "[ "
        for j in range( 0, len(llist ) ):
            column = llist[j]
            for i in range( 0, len( column ) ):
                matrixStr += str( column[i] )
                if i != len(column)-1:
                    matrixStr += " "

            if j != (len(llist)-1):
                matrixStr += " ; \n"
```

```
            else:
                matrixStr += " "

            matrixStr += " ]"

        else:
            matrixStr += "ERROR: unknown target package"

        return matrixStr


    # X Y Z liftPoint, dragPoint, CCW
    #convention: up is positive, right is positive


    rotorList = []
    wrenchDiameter = 0


    if rotorConfiguration == "quadSymbolic":
        rotorList.append( [ 0,         S( "BoomLength"),   0,S( "LiftOffset"),S(
"DragOffset"), 0 ] )
        rotorList.append( [S( "BoomLength"),   0,      0,  S( "LiftOffset"),S(
"DragOffset"), 1 ] )
        rotorList.append( [ 0,         S( "BoomLength")*-1, 0,    S( "LiftOffset"),S(
"DragOffset"), 0 ] )
        rotorList.append( [S( "BoomLength")*-1, 0,       0,  S( "LiftOffset"),S(
"DragOffset"), 1 ] )
        wrenchDiameter = S("BoomLength")
    elif rotorConfiguration == "quadNumeric":
        rotorList.append( [ 0,        1,    0,0.4, 0.4, 0 ] )
        rotorList.append( [ 1,    0,       0,   0.4, 0.4, 1 ] )
```

```
            rotorList.append( [ 0,        -1, 0,     0.4, 0.4, 0 ] )
            rotorList.append( [ -1, 0,        0,   0.4, 0.4, 1 ] )
            wrenchDiameter = 1
        elif rotorConfiguration == "twinNumeric":
            rotorList.append( [ 0,  1, 0,    0.4, 0.4, 0 ] )
            rotorList.append( [ 0, -1, 0,    0.4, 0.4, 1 ] )
            wrenchDiameter = 1
        elif rotorConfiguration == "twinSymbolic":
            rotorList.append( [ 0, S("BoomLength"), 0,    S( "LiftOffset"),S(
"DragOffset"), 0 ] )
            rotorList.append( [ 0, S("BoomLength")*-1, 0,    S( "LiftOffset"),S(
"DragOffset"), 1 ] )
            wrenchDiameter = S("BoomLength")
        elif rotorConfiguration == "coaxialNumeric":
            rotorList.append( [ 0,  0, 0,    0.4, 0.4, 0 ] )
            rotorList.append( [ 0,  0, 1,    0.4, 0.4, 1 ] )
            wrenchDiameter = 1


        matrixL = []
        matrixD = []
        matrixT = []


        matrixQuadrantsToLogical = []
        matrixLogicalToServo = []


        matrixSingleRotorToLogical = []
        matrixSingleRotorToLogical.append( [1, -1, 0 ])
        matrixSingleRotorToLogical.append( [1, 0, -1 ])
        matrixSingleRotorToLogical.append( [1, 1, 0 ])
        matrixSingleRotorToLogical.append( [1, 0, 1 ])
```

```
    for rotor in rotorList:


        CCW_mult = 1
        if rotor[5] == 1:
            CCW_mult = -1


        liftSmb = S("Lf")
        dragSmb = S("Df")


        if liftdragSym == False:
            liftSmb = 1
            dragSmb = 1



        #order: top, right, bottom, left
        #force descriptions: [location, direction] - [ [ X, Y, Z ], [ X, Y, Z ] ]




        #lift
        rotorSideListLift = []
        rotorSideListLift.append( [[rotor[0],          rotor[1] + rotor[3],   rotor[2]], [0,
0, liftSmb ]] )
        rotorSideListLift.append( [[rotor[0] + rotor[3], rotor[1],            rotor[2]], [0,
0, liftSmb ]] )
        rotorSideListLift.append( [[rotor[0],          rotor[1] - rotor[3],   rotor[2]], [0, 0,
liftSmb ]] )
        rotorSideListLift.append( [[rotor[0] - rotor[3], rotor[1],            rotor[2]], [0, 0,
liftSmb ]] )
```

```
#drag
rotorSideListDrag = []
rotorSideListDrag.append( [[rotor[0],        rotor[1] + rotor[3],   rotor[2]],
[dragSmb*-1*CCW_mult, 0,           0 ]] )
rotorSideListDrag.append( [[rotor[0] + rotor[3], rotor[1],          rotor[2]], [0,
dragSmb*CCW_mult,   0 ]] )
rotorSideListDrag.append( [[rotor[0],        rotor[1] - rotor[3],   rotor[2]],
[dragSmb*CCW_mult,   0,           0 ]] )
rotorSideListDrag.append( [[rotor[0] - rotor[3], rotor[1],          rotor[2]], [0,
dragSmb*-1*CCW_mult, 0 ]] )


for direction in range( 4 ):
        wrenchL = calc_wrench( rotorSideListLift[ direction ][0], rotorSideListLift[
direction ][1], wrenchDiameter )
        wrenchD = calc_wrench( rotorSideListDrag[ direction ][0],
rotorSideListDrag[ direction ][1], wrenchDiameter )


        #flatten
        unwrapL = [val for subl in wrenchL for val in subl]
        unwrapD = [val for subl in wrenchD for val in subl]


        unwrap = np.add( unwrapL, unwrapD )


        matrixL.append( unwrapL )
        matrixD.append( unwrapD )
        matrixT.append( unwrap )
```

```
#transposing
matrixT = list( map(list, zip(*matrixT)) )
matrixL = list( map(list, zip(*matrixL)) )
matrixD = list( map(list, zip(*matrixD)) )


matrixStrT = print_matrix( matrixT )
print( matrixStrT )
print("")


matrixStrL = print_matrix( matrixL )
print( matrixStrL )
print("")


matrixStrD = print_matrix( matrixD )
print( matrixStrD )
print("")


matrixStrQuadrantsToLogical = print_matrix( matrixQuadrantsToLogical )


f = open( filepath, "w" )
f.write( matrixStrT )
f.write("\n\n")
f.write( matrixStrL )
f.write("\n\n")
f.write( matrixStrD )
f.write("\n\n")
f.write( matrixStrQuadrantsToLogical )
f.close()#written using python 3.4 32-bit

#read positions
```

```
#need to know: X, Y, lift point, drag point, CW/CCW rotation

#generate 4 points of forces, F R B L
#they're offset by liftpoint or dragpoint from X Y

#then, wrap around the thing in a helper function for scaling the thing

#import sys
#print (sys.version)

#maxima matrix format: matrix( [ a, b ], [c d ] );
# results in:
# [ a b ]
# [ c d ]

from sympy import *
import numpy as np

filepath = "C:/tmp/pythonmatrix.txt"
rotorConfiguration = "quadNumeric"
packageName = "matlab"
liftdragSym = False


def missing_dimension( dim1, dim2 ):
    #expecting 0, 1, or 2 as inputs to dim1 and dim2
    #return whichever number is missing
    #trick: sum of 0 + 1 + 2 = 3, and the missing index is missing from the sum
    return 3 - (dim1 + dim2 )

#this should be a cross product
def calc_wrench( force_position, force_direction, couple_diameter ):
    result_dir_force = force_direction
    result_couple_force = [ 0, 0, 0 ]

    #old way of calculating things. It's wrong
    if false:
        #split the force into its three components. Work with each separately
        for dimension in range( 3 ):
            #for example, for a force on the X axis, only Y and Z positions are relevant.
            #Only Y and Z axis rotations may have rotation
            #therefore, this becomes an R2 problem
            magnitude = force_direction[ dimension ]
```

```
        for dim2 in range(3):
            if dim2 == dimension:
                continue

            result_couple_force[ missing_dimension(dimension, dim2) ] += magnitude *
force_position[dim2] / ( 2 * couple_diameter )

    else:
        result_couple_force = np.cross( force_position, force_direction )
        result_couple_force = np.divide( result_couple_force, ( 2 * couple_diameter ) )

    #order: [drag right, drag Up, lift], [CW yaw, pitch, roll]
    return [ result_dir_force, result_couple_force ]

def print_matrix( llist ):
    matrixStr = ""

    if packageName == "maxima":
        matrixStr += "matrix( "
        for j in range( 0, len(llist ) ):
            column = llist[j]
            matrixStr += "[ "
            for i in range( 0, len( column ) ):
                matrixStr += str( column[i] )
                if i != len(column)-1:
                    matrixStr += ", "

            if j != (len(llist)-1):
                matrixStr += " ], \n"
            else:
                matrixStr += " ]"
        matrixStr += " )"

    elif packageName == "mathematica":
        matrixStr += "{ "
        for j in range( 0, len(llist ) ):
            column = llist[j]
            matrixStr += "{ "
            for i in range( 0, len( column ) ):
                matrixStr += str( column[i] )
                if i != len(column)-1:
                    matrixStr += ", "

            if j != (len(llist)-1):
                matrixStr += " }, \n"
```

```
        else:
            matrixStr += " }"
        matrixStr += " }"

    elif packageName == "MuPad":
        matrixStr += "matrix( [ "
        for j in range( 0, len(llist ) ):
            column = llist[j]
            matrixStr += "[ "
            for i in range( 0, len( column ) ):
                matrixStr += str( column[i] )
                if i != len(column)-1:
                    matrixStr += ", "

            if j != (len(llist)-1):
                matrixStr += " ], \n"
            else:
                matrixStr += " ] "
        matrixStr += " ] )"

    elif packageName == "matlab":
        matrixStr += "[ "
        for j in range( 0, len(llist ) ):
            column = llist[j]
            for i in range( 0, len( column ) ):
                matrixStr += str( column[i] )
                if i != len(column)-1:
                    matrixStr += " "

            if j != (len(llist)-1):
                matrixStr += " ; \n"
            else:
                matrixStr += " "

        matrixStr += " ]"

    else:
        matrixStr += "ERROR: unknown target package"

    return matrixStr


# X Y Z liftPoint, dragPoint, CCW
#convention: up is positive, right is positive
```

```
rotorList = []
wrenchDiameter = 0

if rotorConfiguration == "quadSymbolic":
    rotorList.append( [ 0,        S( "BoomLength"),   0,S( "LiftOffset"),S( "DragOffset"),
0 ] )
    rotorList.append( [S( "BoomLength"),   0,        0,  S( "LiftOffset"),S(
"DragOffset"), 1 ] )
    rotorList.append( [ 0,        S( "BoomLength")*-1, 0,    S( "LiftOffset"),S(
"DragOffset"), 0 ] )
    rotorList.append( [S( "BoomLength")*-1, 0,        0,  S( "LiftOffset"),S(
"DragOffset"), 1 ] )
    wrenchDiameter = S("BoomLength")
elif rotorConfiguration == "quadNumeric":
    rotorList.append( [ 0,        1,   0,0.4, 0.4, 0 ] )
    rotorList.append( [ 1,   0,        0,   0.4, 0.4, 1 ] )
    rotorList.append( [ 0,        -1, 0,    0.4, 0.4, 0 ] )
    rotorList.append( [ -1, 0,        0,   0.4, 0.4, 1 ] )
    wrenchDiameter = 1
elif rotorConfiguration == "twinNumeric":
    rotorList.append( [ 0, 1, 0,    0.4, 0.4, 0 ] )
    rotorList.append( [ 0, -1, 0,    0.4, 0.4, 1 ] )
    wrenchDiameter = 1
elif rotorConfiguration == "twinSymbolic":
    rotorList.append( [ 0, S("BoomLength"), 0,    S( "LiftOffset"),S( "DragOffset"), 0 ] )
    rotorList.append( [ 0, S("BoomLength")*-1, 0,    S( "LiftOffset"),S( "DragOffset"), 1
] )
    wrenchDiameter = S("BoomLength")
elif rotorConfiguration == "coaxialNumeric":
    rotorList.append( [ 0, 0, 0,    0.4, 0.4, 0 ] )
    rotorList.append( [ 0, 0, 1,    0.4, 0.4, 1 ] )
    wrenchDiameter = 1

matrixL = []
matrixD = []
matrixT = []

matrixQuadrantsToLogical = []
matrixLogicalToServo = []

matrixSingleRotorToLogical = []
matrixSingleRotorToLogical.append( [1, -1, 0 ])
matrixSingleRotorToLogical.append( [1, 0, -1 ])
matrixSingleRotorToLogical.append( [1, 1, 0 ])
matrixSingleRotorToLogical.append( [1, 0, 1 ])
```

```
for rotor in rotorList:

    CCW_mult = 1
    if rotor[5] == 1:
        CCW_mult = -1


    liftSmb = S("Lf")
    dragSmb = S("Df")

    if liftdragSym == False:
        liftSmb = 1
        dragSmb = 1



    #order: top, right, bottom, left
    #force descriptions: [location, direction] - [ [ X, Y, Z ], [ X, Y, Z ] ]




    #lift
    rotorSideListLift = []
    rotorSideListLift.append( [[rotor[0],        rotor[1] + rotor[3],   rotor[2]], [0, 0,
liftSmb ]] )
    rotorSideListLift.append( [[rotor[0] + rotor[3], rotor[1],          rotor[2]], [0, 0,
liftSmb ]] )
    rotorSideListLift.append( [[rotor[0],        rotor[1] - rotor[3],   rotor[2]], [0, 0,
liftSmb ]] )
    rotorSideListLift.append( [[rotor[0] - rotor[3], rotor[1],          rotor[2]], [0, 0,
liftSmb ]] )

    #drag
    rotorSideListDrag = []
    rotorSideListDrag.append( [[rotor[0],        rotor[1] + rotor[3],   rotor[2]],
[dragSmb*-1*CCW_mult, 0,        0 ]] )
    rotorSideListDrag.append( [[rotor[0] + rotor[3], rotor[1],          rotor[2]], [0,
dragSmb*CCW_mult,   0 ]] )
    rotorSideListDrag.append( [[rotor[0],        rotor[1] - rotor[3],   rotor[2]],
[dragSmb*CCW_mult,   0,        0 ]] )
    rotorSideListDrag.append( [[rotor[0] - rotor[3], rotor[1],          rotor[2]], [0,
dragSmb*-1*CCW_mult, 0 ]] )


    for direction in range( 4 ):
```

```
    wrenchL = calc_wrench( rotorSideListLift[ direction ][0], rotorSideListLift[
direction ][1], wrenchDiameter )
    wrenchD = calc_wrench( rotorSideListDrag[ direction ][0], rotorSideListDrag[
direction ][1], wrenchDiameter )

    #flatten
    unwrapL = [val for subl in wrenchL for val in subl]
    unwrapD = [val for subl in wrenchD for val in subl]

    unwrap = np.add( unwrapL, unwrapD )

    matrixL.append( unwrapL )
    matrixD.append( unwrapD )
    matrixT.append( unwrap )


#transposing
matrixT = list( map(list, zip(*matrixT)) )
matrixL = list( map(list, zip(*matrixL)) )
matrixD = list( map(list, zip(*matrixD)) )

matrixStrT = print_matrix( matrixT )
print( matrixStrT )
print("")

matrixStrL = print_matrix( matrixL )
print( matrixStrL )
print("")

matrixStrD = print_matrix( matrixD )
print( matrixStrD )
print("")


f = open( filepath, "w" )
f.write( matrixStrT )
f.write("\n\n")
f.write( matrixStrL )
f.write("\n\n")
f.write( matrixStrD )
f.write("\n\n")
f.close()
```

The following is a set of Matlab scripts to solve for a simple quadratic model of lift and drag.

```
%plotter

NUM_ITER = 16;
NUM_DIMENSIONS = 8;

start_vec = [ 0 0 0.5 0 0 0]';
end_vec = [ 0 0.1 0.5 0 0 0]';

last = (NUM_ITER - 1);

result_matrix = zeros(NUM_DIMENSIONS,NUM_ITER);

for n = 0:last

        inter_vec = start_vec * ( n / last ) + end_vec * ( (last-n) / last );

        result = fsolve( @(x) calcforces(x, inter_vec), ones(1,NUM_DIMENSIONS) );

        %MATLAB® plots each matrix column as a separate line.
        result_matrix(:,n+1) = result;

end

figure
plot( result_matrix )




function [F, J] = calcforces( x, wantedforces )
% calcforces( twistvector, wanted )
% fsolve( @(x) calcforces(x, [ 0 1 1 0 0 0]'), zeros(1,8), options )

insize = 8;
checkswash = true;

if ~isvector(x)
    error('Input must be a vector')
```

```
        end

        if length(x) ~= insize
                error('wrong input length')
        end

        xdiag = diag(x);

        Mdrag = [ -1 0 1 0 1 0 -1 0 ;
        0 1 0 -1 0 -1 0 1 ;
        0 0 0 0 0 0 0 0 ;
        0.0 0.0 -0.0 0.0 0.0 0.5 -0.0 -0.5 ;
        -0.0 0.0 0.0 0.0 0.5 0.0 -0.5 0.0 ;
        0.2 0.2 0.2 0.2 -0.2 -0.2 -0.2 -0.2   ];

        Mlift = [ 0 0 0 0 0 0 0 0 ;
        0 0 0 0 0 0 0 0 ;
        1 1 1 1 1 1 1 1 ;
        0.2 0.0 -0.2 0.0 0.2 0.0 -0.2 0.0 ;
        0.0 -0.2 0.0 0.2 0.0 -0.2 0.0 0.2 ;
        0.0 0.0 0.0 -0.0 0.0 0.0 0.0 -0.0   ];

        qtol = [ 0.5 -1 0;
                        0.5 0 -1;
                        0.5 1 0;
                        0.5 0 1];

        ltoq = [ 0.5 0.5 0.5 0.5;
                        -0.5 0 0.5 0;
                        0 -0.5 0 0.5 ];

        if insize == 12


                qtolzeros = zeros( 4, 3 );
                ltoqzeros = zeros( 3, 4 );

                bigqtol = [ qtol qtolzeros qtolzeros qtolzeros;
                                qtolzeros qtol qtolzeros qtolzeros;
                                qtolzeros qtolzeros qtol qtolzeros;
                                qtolzeros qtolzeros qtolzeros qtol ];

                bigltoq = [ ltoq ltoqzeros ltoqzeros ltoqzeros;
                                ltoqzeros ltoq ltoqzeros ltoqzeros;
                                ltoqzeros ltoqzeros ltoq ltoqzeros;
```

```
                        ltoqzeros ltoqzeros ltoqzeros ltoq ];


        x =  x * bigltoq;
end




xsquare = x .* x;
forces1 = Mdrag * xsquare;

forces2 = Mlift * x;


F = forces1 + forces2 - wantedforces;
J = Mdrag * xdiag * 2 + Mlift;


if checkswash == true

        deranked = qtol * ltoq;
        rankdiff = eye(4) - deranked;

        bigrankdiff = [];
        if( insize == 16 )
                bigrankdiff = [ rankdiff zeros(4) zeros(4) zeros(4);
                                zeros(4) rankdiff zeros(4) zeros(4);
                                zeros(4) zeros(4) rankdiff zeros(4);
                                zeros(4) zeros(4) zeros(4) rankdiff ];
        else %8
                bigrankdiff = [ rankdiff zeros(4);
                                zeros(4) rankdiff ];
        end

        levelswash = x * bigrankdiff;
        F = [F; levelswash];
        J = [ J; bigrankdiff ];
end
```

EMBODIMENTS

Although the present invention is defined in the attached claims, it should be understood that the present invention can also (alternatively) be defined in accordance with the following embodiments:

1. A rotary wing aircraft comprising:

a central body;
at least two rotors, each rotor connected to the central body by a swashplate; and
a control system configured to calculate pitch of blades on each of the rotors to move the aircraft laterally without inclining the aircraft.

2. The rotary wing aircraft of embodiment 1, wherein the at least two rotors comprise four rotors.

3. The rotary wing aircraft of embodiment 2, wherein the aircraft is a quadcopter.

4. The rotary wing aircraft of embodiment 2, wherein the aircraft is a coaxial helicopter.

5. The rotary wing aircraft of embodiment 2, comprising a control system operable to control pitch of blades on each of the four rotors independently.

6. The rotary wing aircraft of embodiment 2, wherein the control system comprises a remote control unit (e.g., a hand-held remote control unit).

7. The rotary wing aircraft of embodiment 2, comprising onboard controls configured to be operated by a pilot.

8. A system for controlling the flight of an aircraft with a plurality of rotors, the flight control system comprising:

 a electronic control system programmed to calculate a pitch for blades of each rotor of the plurality of rotors based on an input indicating a desired motion of the aircraft, the electronic control system operable to calculate the desired pitch for blades of each rotor of the plurality of rotors to provide lateral motion of the aircraft without inclining the aircraft; and
 a plurality of swashplates, each swashplate associated with a unique rotor of the plurality of rotors, each swash plate in communication with the electronic control system and operable to control the pitch for blades of the associated unique rotor in response to signals (e.g., electronic or hydraulic signals) from the electronic control system.

9. The system of embodiment 8, wherein the aircraft is a quadcopter.

10. The system of embodiment 9, comprising a remote unit is in wireless electronic communication with the electronic control system to provide the input to the control system.

11. The system of embodiment 8, comprising an onboard input system operable by a pilot to provide the input to the electronic control system.

12. The system of embodiment 8, wherein the electronic control system is operable to calculate the desired pitch for blades of each rotor of the plurality of rotors to vary the yaw of a quadrotor with zero lift and without using a tail rotor or a NOTAR system.

13. The system of embodiment 8, wherein the swashplates are operable to control pitch of blades on each of the plurality of rotors independently.

14. A method of controlling the flight of a non-coaxial multirotor aircraft, the method comprising:

 receiving input indicating desired motion of the multirotor aircraft in an electronic control system;
 calculating, in the electronic control system, a pitch cycle for each rotor of the multirotor aircraft based on the input;
 transmitting a control signal including information about the pitch cycle to a plurality of swashplates, each swash plate associated with a unique rotor of the multirotor aircraft; and
 operating the plurality of swash plates to provide the pitch cycle for the associated rotor;
 wherein calculating a pitch cycle for each rotor of the multirotor aircraft comprises calculating a pitch cycle for each rotor of the multirotor aircraft that generates yaw thrust while producing zero lift.

15. The method of embodiment 14, wherein calculating a pitch cycle for each rotor of the multirotor aircraft comprises calculating a pitch cycle for each rotor of the multirotor aircraft that generates sideways translational force without generating significant lift.

16. The method of embodiment 14, wherein calculating a pitch cycle for each rotor of the multirotor aircraft comprises calculating a pitch cycle for each rotor of the multirotor aircraft that generates forward motion and lift without sideways translational force, yaw, pitch or roll.

17. The method of embodiment 14, wherein calculating a pitch cycle for each rotor of the multirotor aircraft comprises calculating a pitch cycle for each rotor of a quadcopter.

18. The method of embodiment 14, wherein calculating a pitch cycle for each rotor of the multirotor aircraft comprises calculating a pitch cycle for each rotor of the multirotor aircraft that compensates for a lack of rotation of one of the rotors.

19. A rotary wing aircraft comprising:

a central body;
a lower rotor having a lower set of blades, the lower rotor connected to the central body by a first swashplate controlling collective and cyclic of the lower set of blades; and
an upper rotor coaxial with the lower rotor, the upper rotor having an upper set of blades; the upper rotor connected to the central body by a second swashplate controlling pitch of the upper set of blades independently of the collective and cyclic of the lower set of blades.

20. The rotary wing aircraft of embodiment 19, comprising a control system configured to calculate collective and cyclic of the lower set of blades and collective and cyclic of the upper set of blades to move the aircraft laterally without inclining the aircraft.

21. The rotary wing aircraft of embodiment 19, comprising a third swashplate with:

a non-rotating portion;
base control rods operable to tilt and axially move the non-rotating portion; and
a rotating portion mounted on the non-rotating portion.

22. The rotary wing aircraft of embodiment 21, wherein the rotating portion of the third swashplate is mechanically connected to a bottom rotor of the coaxial rotor such that the rotating portion of the third swashplate rotates with a speed and direction of the bottom rotor.

23. The rotary wing aircraft of embodiment 22, comprising first control rods extending from the first swashplate through apertures in the non-rotating portion of the third swashplate.

24. The rotary wing aircraft of embodiment 23, comprising second control rods extending from the rotating portion of the third swashplate to the second swashplate.

25. The rotary wing aircraft of embodiment 19, comprising individual cyclic and collective controls on the upper rotor and the lower rotor.

26. A method of controlling the flight of a coaxial aircraft or a multirotor aircraft with three or more rotors, the method comprising:

cyclically generating a negative force in the direction of blade travel on a first rotor such that a cumulative result of the negative force on the first rotor is perpendicular to an axis of rotation of the first rotor; and
cyclically generating a negative force in the direction of blade travel on a second rotor such that a cumulative result of the negative force on the second rotor is perpendicular to an axis of rotation of the second rotor.

27. The method of embodiment 26, comprising hovering the aircraft at an inclined angle by controlling the negative force on the first rotor and the negative force on the second rotor.

28. The method of embodiment 26, comprising rotating the aircraft in place by controlling the negative force on the first rotor and the negative force on the second rotor.

29. The method of embodiment 26, comprising generating sideways translational force without generating significant lift on the aircraft by controlling the negative force on the first rotor and the negative force on the second rotor.

30. The method of embodiment 26, comprising generating sideways translational force without generating significant lift on the aircraft by controlling the negative force on the first rotor and the negative force on the second rotor.

31. The method of embodiment 26, comprising generating forward motion and lift without sideways translational force, yaw, pitch or roll on the aircraft by controlling the negative force on the first rotor and the negative force on the second rotor.

32. The method of embodiment 26, comprising:

receiving input indicating desired motion of the aircraft in an electronic control system;
calculating, in the electronic control system, a pitch cycle for each rotor of the aircraft based on the input;
transmitting a control signal including information about the pitch cycle to a plurality of swashplates, each swash plate associated with a unique rotor of the aircraft; and
operating the plurality of swash plates to provide the pitch cycle for the associated rotor.

33. The method of embodiment 26, wherein the first rotor and the second rotor are coaxial.

34. The method of embodiment 26, comprising using mechanical flaps or air brakes to generate drag.

**Claims**

1. A rotary wing aircraft comprising:

a central body;
at least two rotors, each rotor connected to the central body by a swashplate, particularly wherein where the at least two rotors comprise four rotors; and
a control system configured to calculate pitch of blades on each of the rotors to move the aircraft laterally without inclining the aircraft.

2. The rotary wing aircraft of claim 1, wherein the aircraft is a quadcopter or a coaxial helicopter.

3. The rotary wing aircraft of claim 1, comprising a control system operable to control pitch of blades on each of the rotors independently.

4. The rotary wing aircraft of claim 1, wherein the control system comprises a remote control unit (e.g., a hand-held remote control unit) and/or onboard controls configured to be operated by a pilot.

5. A system for controlling the flight of an aircraft with a plurality of rotors, the flight control system comprising:

a electronic control system programmed to calculate a pitch for blades of each rotor of the plurality of rotors based on an input indicating a desired motion of the aircraft, the electronic control system operable to calculate the desired pitch for blades of each rotor of the plurality of rotors to provide lateral motion of the aircraft without inclining the aircraft; and
a plurality of swashplates, each swashplate associated with a unique rotor of the plurality of rotors, each swash plate in communication with the electronic control system and operable to control the pitch for blades of the associated unique rotor to provide lateral motion of the aircraft without inclining the aircraft in response to signals (e.g., electronic or hydraulic signals) from the electronic control system.

6. The system of claim 5, comprising a remote unit is in wireless electronic communication with the electronic control system to provide the input to the control system and/or an onboard input system operable by a pilot to provide the input to the electronic control system.

7. The system of claim 5, wherein the electronic control system is operable to calculate the desired pitch for blades of each rotor of the plurality of rotors to vary the yaw of a quadrotor with zero lift and without using a tail rotor or a NOTAR system.

8. A method of controlling the flight of a multirotor aircraft, the method comprising:

receiving input indicating desired motion of the multirotor aircraft in an electronic control system;
calculating, in the electronic control system, a pitch cycle for each rotor of the multirotor aircraft based on the input;
transmitting a control signal including information about the pitch cycle to a plurality of swashplates, each swash plate associated with a unique rotor of the multirotor aircraft; and

operating the plurality of swash plates to provide the pitch cycle for the associated rotor;

wherein calculating a pitch cycle for each rotor of the multirotor aircraft comprises calculating a pitch cycle for each rotor of the multirotor aircraft that generates yaw thrust while producing zero lift.

9. The method of claim 8, wherein calculating a pitch cycle for each rotor of the multirotor aircraft comprises calculating a pitch cycle for each rotor of the multirotor aircraft that generates sideways translational force without generating significant lift.

10. The method of claim 8, wherein calculating a pitch cycle for each rotor of the multirotor aircraft comprises calculating a pitch cycle for each rotor of the multirotor aircraft that generates forward motion and lift without sideways translational force, yaw, pitch or roll.

11. The method of claim 8, wherein calculating a pitch cycle for each rotor of the multirotor aircraft comprises calculating a pitch cycle for each rotor of a quadcopter.

12. The method of claim 8, wherein calculating a pitch cycle for each rotor of the multirotor aircraft comprises calculating a pitch cycle for each rotor of the multirotor aircraft that compensates for a lack of rotation of one of the rotors.

13. The rotary wing aircraft of claim 2, wherein the at least two rotors comprises a lower rotor and an upper rotor:

a lower rotor having a lower set of blades, the lower rotor connected to the central body by a first swashplate controlling collective and cyclic of the lower set of blades; and

an upper rotor coaxial with the lower rotor, the upper rotor having an upper set of blades; the upper rotor connected to the central body by a second swashplate controlling pitch of the upper set of blades independently of the collective and cyclic of the lower set of blades.

14. The rotary wing aircraft of claim 13, comprising a control system configured to calculate collective and cyclic of the lower set of blades and collective and cyclic of the upper set of blades to move the aircraft laterally without inclining the aircraft.

15. The rotary wing aircraft of claim 13, comprising a third swashplate with:

a non-rotating portion;

base control rods operable to tilt and axially move the non-rotating portion; and

a rotating portion mounted on the non-rotating portion.

16. The rotary wing aircraft of claim 15, wherein the rotating portion of the third swashplate is mechanically connected to a bottom rotor of the coaxial rotor such that the rotating portion of the third swashplate rotates with a speed and direction of the bottom rotor.

17. The rotary wing aircraft of claim 16, comprising first control rods extending from the first swashplate through apertures in the non-rotating portion of the third swashplate and second control rods extending from the rotating portion of the third swashplate to the second swashplate.

18. The rotary wing aircraft of claim 13, comprising individual cyclic and collective controls on the upper rotor and the lower rotor.

FIG. 1

EP 2 990 332 A1

FIG. 2

F

L ⊙ R

B

⊗ Downwards (into the "page") force

⊙ Upwards (out of the "page") force

⇨ Sideways (along the "page") force

➡ Direction of rotation

## FIG. 3

F

⊗ L ⊙ R

B

⊗ Downwards (into the "page") force

⊙ Upwards (out of the "page") force

⇨ Sideways (along the "page") force

➡ Direction of rotation

## FIG. 4

Step 1

Step 2

Step 3

Step 4

Step 5

Step 6

FIG. 5

LiftPointProjection

Liftpoint

Liftoffset

CoG

BoomLength

FIG. 6

FIG. 7A

FIG. 7B

FIG. 8A

Strong Positive Pitch

Medium Positive Pitch

Slight Positive Pitch

Zero Positive Pitch

Slight Negative Pitch

Medium Negative Pitch

Strong Negative Pitch

FIG. 8B

FIG. 9A

Legend:
- Strong Positive Pitch
- Medium Positive Pitch
- Slight Positive Pitch
- Zero Positive Pitch
- Slight Negative Pitch
- Medium Negative Pitch
- Strong Negative Pitch

FIG. 9B

FIG. 10A

FIG. 10B

FIG. 11A

Strong Positive Pitch

Medium Positive Pitch

Slight Positive Pitch

Zero Positive Pitch

Slight Negative Pitch

Medium Negative Pitch

Strong Negative Pitch

FIG. 11B

EP 2 990 332 A1

200

FIG. 12

| | Europäisches Patentamt European Patent Office Office européen des brevets | **EUROPEAN SEARCH REPORT** | Application Number EP 15 18 1627 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/315806 A1 (PIASECKI JOHN W [US] ET AL) 29 December 2011 (2011-12-29) * abstract; claim 1; figures 1-20, 29 * * paragraphs [0014], [0022], [0130] - [0132], [0188], [0189]; claims 1,2,19,26,28,29 * | 1-16 | INV. B64C27/08 B64C39/02 |
| X | EP 2 604 520 A1 (BELL HELICOPTER TEXTRON INC [US]) 19 June 2013 (2013-06-19) * abstract; claim 1; figures 12-15, 33 * | 1-3,5, 7-10, 12-18 | |
| X | US 2004/056144 A1 (BASS STEVEN M [US] ET AL) 25 March 2004 (2004-03-25) * abstract; figures 1-4 * | 1,3,5,7 | |
| X | CN 103 935 513 A (JIANGSU AERITECH UNMANNED AERIAL VEHICLE TECHNOLOGY CO LTD) 23 July 2014 (2014-07-23) * figures 1-6 * | 1,2, 4-12, 14-16 | |
| X | JP 2004 121798 A (HIROBOO KK) 22 April 2004 (2004-04-22) * abstract; figures 1-3 * | 1,2,4-6, 8-10,12, 16 | TECHNICAL FIELDS SEARCHED (IPC) B64C A63H |

The present search report has been drawn up for all claims

| Place of search | Date of completion of the search | Examiner |
|---|---|---|
| Munich | 20 January 2016 | Podratzky, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 1627

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2016

| Patent document cited in search report | | Publication date | Patent family member(s) | | Publication date |
|---|---|---|---|---|---|
| US 2011315806 | A1 | 29-12-2011 | US 2011315806 A1<br>US 2015217613 A1<br>WO 2011146349 A2 | | 29-12-2011<br>06-08-2015<br>24-11-2011 |
| EP 2604520 | A1 | 19-06-2013 | CA 2794228 A1<br>CN 103158869 A<br>EP 2604520 A1<br>US 2013149151 A1 | | 13-06-2013<br>19-06-2013<br>19-06-2013<br>13-06-2013 |
| US 2004056144 | A1 | 25-03-2004 | NONE | | |
| CN 103935513 | A | 23-07-2014 | CN 103935513 A<br>WO 2015172559 A1 | | 23-07-2014<br>19-11-2015 |
| JP 2004121798 | A | 22-04-2004 | HK 1066199 A1<br>JP 3673253 B2<br>JP 2004121798 A | | 03-11-2006<br>20-07-2005<br>22-04-2004 |

EPO FORM P0459

For more details about this annex : see Official Journal of the European Patent Office, No. 12/82